# EUROPEAN PATENT APPLICATION

(11) **EP 4 761 317 A1**
(43) Date of publication of application: **17.06.2026**
(21) Application number: 24851361.6
(22) Date of filing: 24.05.2024
(51) Int. Cl.: H04W 16/28, H04W 24/10, H04W 72/12

(54) **TERMINAL, BASE STATION, AND COMMUNICATION METHOD**

(30) Priority: 10.08.2023 JP 2023131069
(71) Applicant: Panasonic Intellectual Property Corporation of America, Torrance, CA 90504 (US)
(72) Inventor: INOUE, Tomohiro, kadoma-shi, Osaka 571-0057 (JP); LI, Hongchao, 63225 Langen (DE); SUZUKI, Hidetoshi, kadoma-shi, Osaka 571-0057 (JP); NUNOME, Tomoya, kadoma-shi, Osaka 571-0057 (JP); HORIUCHI, Ayako, kadoma-shi, Osaka 571-0057 (JP); NISHIO, Akihiko, kadoma-shi, Osaka 571-0057 (JP)
(74) Representative: Grünecker Patent- und Rechtsanwälte PartG mbB
(86) International application number: PCT/JP2024/019144
(87) International publication number: WO 2025/032927

(57) **Abstract**

The present invention appropriately reports interference among terminals. This terminal includes a control circuit that determines a measurement beam for cross-link interference among terminals on the basis of at least one of a transmission configuration indication state (TCI state) and a reception beam from a terminal, and a transmission circuit that transmits information regarding a measurement value of the cross-link interference measured using the measurement beam.

## Description

### Technical Field

The present disclosure relates to a terminal, a base station, and a communication method.

### Background Art

The specification of a physical layer for Release 17 new radio access technology (NR) has been completed as functional extension of the 5th generation mobile communication systems (5G) in the 3rd generation partnership project (3GPP). NR supports functions for realizing Ultra Reliable and Low Latency Communication (URLLC) in addition to enhanced Mobile Broadband (eMBB) to meet requirements such as high speed and large capacity (see, e.g., Non-Patent Literature (hereinafter, referred to as NPL) 1 to NPL 6).

### Citation List

### Non-Patent Document

NPL 1
   3GPP TS 38.211 V17.5.0, "NR; Physical channels and modulation (Release 17)," Jun. 2023
NPL 2
   3GPP TS 38.212 V17.5.0, "NR; Multiplexing and channel coding (Release 17)," Mar. 2023
NPL 3
   3GPP TS 38.213 V17.6.0, "NR; Physical layer procedure for control (Release 17)," Jun. 2023
NPL 4
   3GPP TS 38.214 V17.6.0, "NR; Physical layer procedures for data (Release 17)," Jun. 2023
NPL 5
   3GPP TS 38.215 V17.3.0, "NR; Physical layer measurements (Release 17)," Mar. 2023
NPL 6
   3GPP TS 38.331 V17.5.0, "NR; Radio Resource Control (RRC) protocol specification (Release 17)", July 2023

### Summary of Invention

However, there is room for discussion on a method of reporting interference between terminals.

One non-limiting exemplary embodiment of the present disclosure facilitates providing a terminal, a base station, and a communication method each capable of appropriately reporting interference between terminals.

A terminal according to one exemplary embodiment of the present disclosure includes: control circuitry, which, in operation, determines a measurement beam for a cross-link interference between terminals based on at least one of a transmission configuration indication state (TCI state) and/or a reception beam of a terminal; and transmission circuitry, which, in operation, transmits information related to a measurement value of the cross-link interference measured using the measurement beam.

It should be noted that general or specific embodiments may be implemented as a system, an apparatus, a method, an integrated circuit, a computer program, a storage medium, or any selective combination thereof.

According to an embodiment of the present disclosure, interference between terminals can be appropriately reported.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an exemplary subband non-overlapping full duplex (SBFD) operation;
FIG. 2 is a diagram illustrating an exemplary Dynamic/flexible time division duplex (TDD) operation;
FIG. 3 is a diagram illustrating an example of cross-link interference (CLI) between terminals;
FIG. 4 is a diagram illustrating an example of beam-based terminal-to-terminal CLI measurement;
FIG. 5 is a diagram illustrating an example of a relationship between a transmission configuration indication (TCI) state and a channel state information-reference signal (CSI-RS);
FIG. 6 is a block diagram illustrating a configuration example of a part of a base station;
FIG. 7 is a block diagram illustrating a configuration example of a part of a terminal;
FIG. 8 is a block diagram illustrating a configuration example of a base station;
FIG. 9 is a block diagram illustrating a configuration example of the terminal;
FIG. 10 is a sequence diagram illustrating an operation example of the base station and the terminal;
FIG. 11 is a diagram illustrating an example of beam-based terminal-to-terminal CLI measurement;
FIG. 12 is a diagram illustrating an example of beam-based terminal-to-terminal CLI measurement;
FIG. 13 is a diagram illustrating an example of beam-based terminal-to-terminal CLI measurement;
FIG. 14 is a diagram illustrating an example of beam-based terminal-to-terminal CLI measurement;
FIG. 15 is a diagram illustrating an example of beam-based terminal-to-terminal CLI measurement;
FIG. 16 is a diagram illustrating an example of beam-based terminal-to-terminal CLI measurement;
FIG. 17 is a diagram illustrating an example of beam-based terminal-to-terminal CLI measurement;
FIG. 18 is a diagram of an exemplary architecture of a 3GPP NR system;

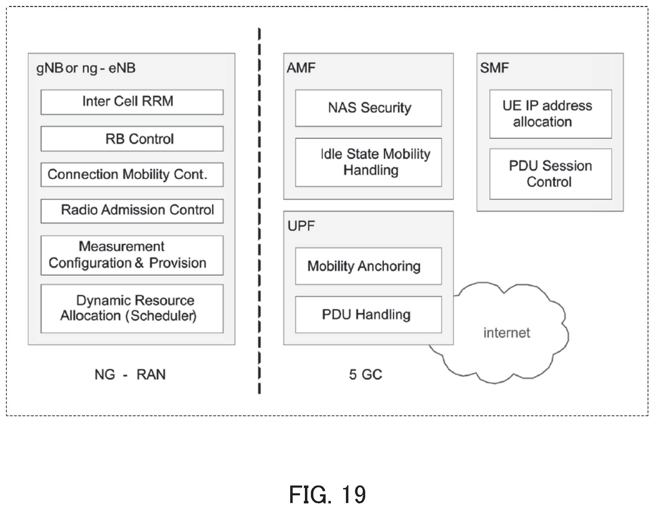

FIG. 19 schematically illustrates a functional split between Next Generation - Radio Access Network (NG-RAN) and 5th Generation Core (5GC);
FIG. 20 is a sequence diagram of a Radio Resource Control (RRC) connection setup/reconfiguration procedure;
FIG. 21 schematically illustrates usage scenarios of enhanced Mobile Broadband (eMBB) massive Machine Type Communications (mMTC), and Ultra Reliable and Low Latency Communications (URLLC); and
FIG. 22 is a block diagram illustrating an exemplary 5G system architecture for a non-roaming scenario.

### Description of Embodiments

Hereinafter, embodiments of the present disclosure will be described in detail with reference to the accompanying drawings.

### [Regarding subband non-overlapping full duplex (SBFD) and Dynamic/flexible time division duplex (TDD)]

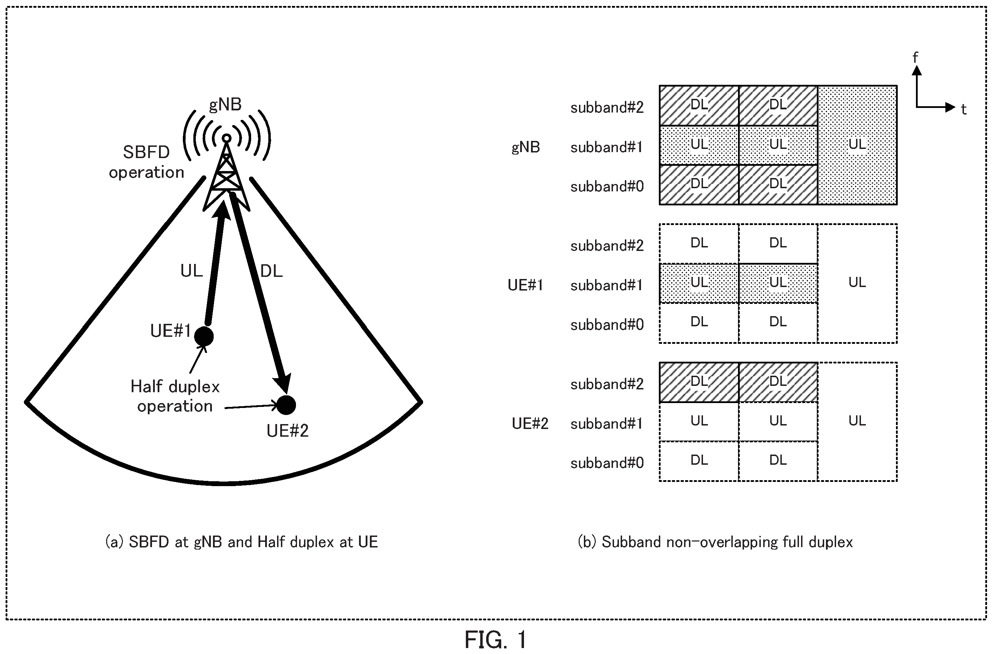

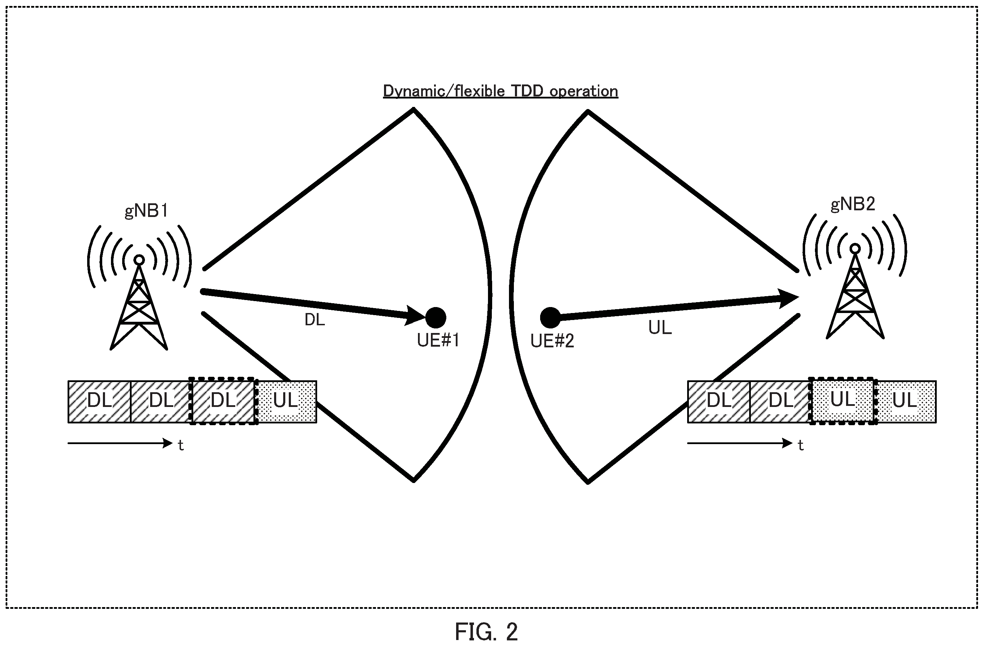

In Release 18, subband non-overlapping full duplex (SBFD) and Dynamic/flexible TDD have been discussed. FIG. 1 illustrates an exemplary SBFD, and FIG. 2 illustrates an exemplary Dynamic/flexible TDD.

In FIG. 1, (a) illustrates exemplary operations of a base station (also referred to as gNB) and terminals (each also referred to as User Equipment (UE) (e.g., UE #1 and UE #2) in the same cell in an SBFD operation. In the SBFD operation, the base station performs an SBFD operation, and the terminals perform Half duplex operations.

In FIG. 1, (b) illustrates exemplary allocation of subbands in an SBFD operation. In (b) of FIG. 1, the vertical axis represents frequency, and the horizontal axis represents time. In (b) of FIG. 1, "UL" refers to Uplink transmission, and "DL" refers to Downlink transmission. Further, resources that are not used in each device (e.g., gNB, UE #1, and UE #2) are indicated by dotted lines.

As illustrated in (b) of FIG. 1, in SBFD, a frequency resource (frequency band) is divided into a plurality of subbands (or each also referred to as a band, RB set, or sub Bandwidth part (BWP)), and transmissions in different directions in units of subbands are supported. As illustrated in (b) of FIG. 1, the base station can perform transmission and reception (e.g., SBFD operation) in uplink and downlink simultaneously, and the terminal can perform transmission and reception (e.g., Half duplex operation) in either uplink or downlink in a certain time resource. For example, in (b) of FIG. 1, UE #1 communicates with the base station in uplink and UE #2 communicates with the base station in downlink in the same time resource (e.g., slot or symbol).

FIG. 2 illustrates an operation example of different base stations (e.g., gNB1 and gNB2) and terminals (e.g., UE #1 and UE #2) in dynamic/flexible TDD operation. In a Dynamic/flexible TDD operation, base stations and terminals may perform Half duplex operations and transmission directions in different base stations are possibly different from each other.

In the example of FIG. 2, at the same time resource (e.g., slot or symbol at the same time point), gNB1 performs DL transmission to UE #1, and gNB2 performs UL reception from UE #2.

### [Regarding Interference]

In the case of a Dynamic/flexible TDD operation, various types of interference possibly occur. For example, cross-link interference (CLI) between terminals (UE-to-UE) and CLI between base stations (gNB-to-gNB) possibly occur. Since CLI between terminals and CLI between base stations greatly deteriorate reception performance, a countermeasure is required.

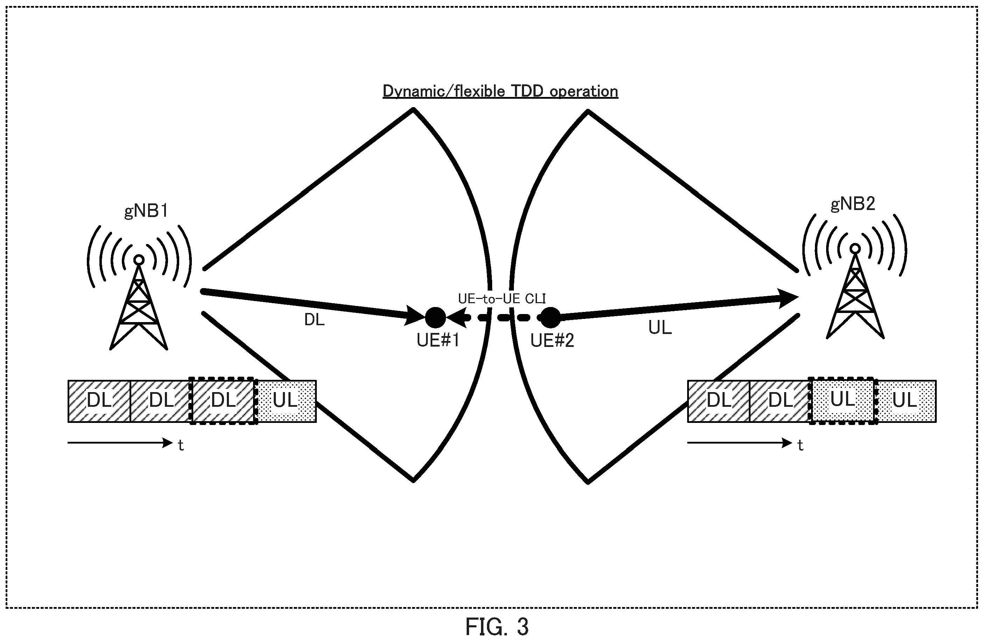

For example, in the Dynamic/Flexible TDD operation, as illustrated in FIG. 3, different base stations may perform communication in different directions at the same time. In this case, since the terminal (in FIG. 3, UE #1) that performs DL reception may receive CLI from the terminal (in FIG. 3, UE #2) that performs UL transmission, the reception performance of DL in the terminal (UE #1) that performs DL reception is possibly deteriorated.

In the following, regarding CLI between terminals, a terminal that causes interference is also referred to as an "aggressor UE", and a terminal that receives interference is also referred to as a "victim UE".

Examples of a method of avoiding such interference include a method in which the victim UE measures terminal-to-terminal CLI, reports the measurement result to the base station, and the base station avoids terminal-to-terminal CLI by scheduling or the like based on the measurement result. For example, in the scheduling, the base station may assign the DL reception of the victim UE to a time resource different from the UL transmission of the aggressor UE.

### [CLI Measurement Method]

A method of measuring terminal-to-terminal CLI will be described.

For example, the aggressor UE transmits a reference signal (sounding reference signal (SRS)) or a UL channel for CLI measurement, and the victim UE receives the SRS or the UL channel and performs CLI measurement. In this case, in order for the victim UE to know (or receive) a configuration of the sounding reference signal or the UL channel for CLI measurement from the aggressor UE, for example, the base station may share (or indicate or configure) information on the SRS or the UL channel for CLI measurement with the terminal in advance.

Examples of the measurement value of the CLI include reference signal received power (SRS-RSRP) or received signal strength indicator (CLI-RSSI). The SRS-RSRP is a value of the received power of the SRS measured by the terminal receiving the SRS transmitted from another terminal. Further, the CLI-RSSI is a linear average value of the total received power measured in a measurement resource configured for the terminal.

For example, the aggressor UE transmits SRS, and the victim UE receives the SRS transmitted from the aggressor UE and measures SRS-RSRP. The victim UE reports a plurality of SRS-RSRPs to the base station. The victim UE reports a plurality of SRS-RSRP values (e.g., terminal-to-terminal CLI values) to the base station. The base station performs, for example, processing of reducing the terminal-to-terminal CLI (e.g., referred to as CLI reduction processing) based on the reported terminal-to-terminal CLI value.

One of the terminal-to-terminal CLI reduction processing may be a method of reducing the CLI from the aggressor UE to the victim UE by switching the reception beam of the victim UE or the transmission beam of the aggressor UE to a beam having a small CLI. For example, in a case where it is specified that the influence of the CLI from transmission beam 1 of the aggressor UE to the victim UE is smaller than the influence of the CLI from transmission beam 2 of the aggressor UE to the victim UE, the aggressor UE can reduce the CLI to the victim UE by performing the UL communication using transmission beam 1.

In this method, the beam-based terminal-to-terminal CLI measurement is used. Examples of Method of the beam-based terminal-to-terminal CLI measurement include a method of measuring the terminal-to-terminal CLI for each reception beam of the victim UE and a method of measuring the terminal-to-terminal CLI for each transmission beam of the aggressor UE.

Hereinafter, Method of measuring the terminal-to-terminal CLI for each reception beam of the victim UE will be described.

In this method, the victim UE receives, for each reception beam, a signal of a CLI measurement resource (e.g., an SRS or the like; also simply referred to as a resource for CLI measurement) transmitted from an aggressor UE, and measures a CLI value (e.g., an SRS-RSRP) for each reception beam. In this case, since the victim UE has difficulty in performing the CLI measurement for each reception beam at once using a plurality of reception beams at the same time, the victim UE switches a plurality of reception beams to measure the CLI. The aggressor UE transmits the signal of the resource for CLI measurement, for example, in response to the switching of the reception beam in the victim UE.

Here, the victim UE does not share information on the reception beam of the UE with the base station. Therefore, the base station has difficulty in instructing the victim UE to switch the reception beam to measure the CLI. Therefore, for example, the switching of the reception beam may be performed using a transmission configuration indication (TCI) state (transmission configuration indication state). The TCI state is associated with the transmission beam of the base station, and the reception beam of the victim UE is paired with the transmission beam of the base station. By using the TCI state, it is possible to switch the reception beam of the victim UE.

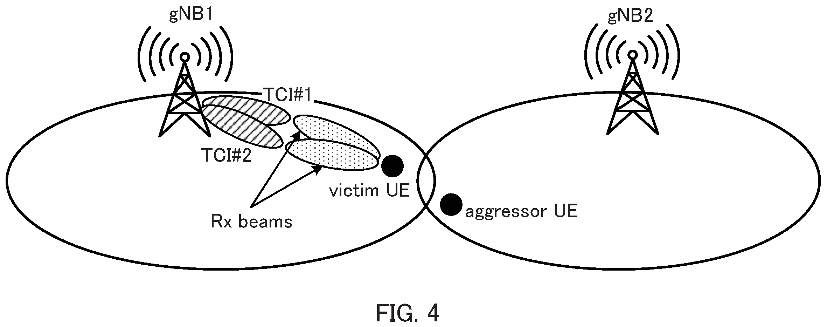

FIG. 4 illustrates an example of Method of measuring the terminal-to-terminal CLI for each reception beam of the victim UE. As illustrated in FIG. 4, TCI #1 and TCI #2 are respectively associated with the transmission beams of the base station, and the transmission beams of the base station and the reception beams of the victim UE are configured in pairs. In this case, the base station can instruct the terminal (victim UE) to receive the terminal-to-terminal resource for CLI measurement using the reception beams corresponding to TCI #1 and TCI #2 and to perform the CLI measurement. The transmission beams of the base station and the reception beams of the terminal are not limited to being configured in pairs (e.g., one-to-one) and may be configured in a many-to-one or one-to-many relationship.

Next, Method of measuring the terminal-to-terminal CLI for each transmission beam of the aggressor UE will be described.

In this method, the aggressor UE transmits a signal of the resource for CLI measurement (e.g., SRS or the like) using different transmission beams, and the victim UE receives the signal of the resource for CLI measurement using a fixed reception beam and measures the CLI value (e.g., SRS-RSRP). In this case, the aggressor UE switches a plurality of transmission beams to transmit the signal of the resource for CLI measurement. For example, since the switching of the transmission beam of the aggressor UE can be configured by the configuration of the SRS, the aggressor UE may transmit a plurality of signals of the SRS resources in which different beams are configured.

The method of the beam-based terminal-to-terminal CLI measurement has been described above.

In the beam-based terminal-to-terminal CLI measurement, in a case where all the reception beams of the victim UE or all the transmission beams of the aggressor UE are measured, the overhead of the measurement (or the report) increases.

In one non-limiting exemplary embodiment of the present disclosure, a method of reducing the measurement overhead in the beam-based terminal-to-terminal CLI measurement will be described.

### [TCI state]

The TCI state will be described.

The TCI state is associated with a reference signal, such as a channel state information-reference signal (CSI-RS) or a synchronization signal block (SSB). Further, for example, by associating the transmission of a physical downlink shared channel (PDSCH) or a physical downlink control channel (PDCCH) with a specific TCI state, the base station can indicate to the terminal that the PDSCH or PDCCH transmission is transmitted using spatial information (e.g., a quasi-co-location (QCL) relationship or a spatial relationship), such as a spatial filter identical to a CSI-RS or an SSB associated with a TCI state associated with the channel. The terminal can decode PDSCH or PDCCH based on the indicated spatial information.

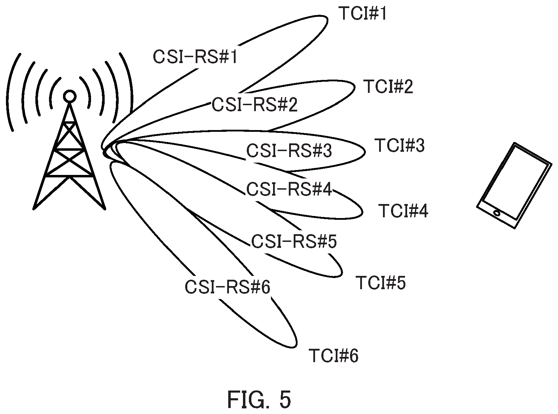

FIG. 5 illustrates an example of a relationship between the TCI state and the CSI-RS. As illustrated in FIG. 5, in a case where a plurality of CSI-RSs (CSI-RS#1 to #6) are transmitted (e.g., in beam management using the CSI-RS), different TCI state IDs (e.g., TCI #1 to TCI #6) are respectively associated with CSI-RSs.

### [Transmission of PDSCH using TCI state]

As an example, PDSCH transmission using the TCI state will be described.

The base station configures a plurality of (e.g., a maximum of 128) TCI states for the terminal, for example, using higher layer signaling, such as radio resource control (RRC) signaling.

The terminal measures the CSI-RS or SSB (e.g., measures a layer 1-RSRP (L1-RSRP) such as a CSI-RSRP or an SSB-RSRP) and reports information (e.g., also referred to as a CSI report) including a plurality of (e.g., a maximum of 4) L1-RSRPs in descending order and a CSI-RS ID or an SSB ID corresponding to the plurality of L1-RSRPs to the base station.

The base station configures (or activates) a plurality of (e.g., a maximum of 8) TCI states for the terminal using a medium access control-control element (MAC-CE) based on the reported information. For example, the base station may indicate, to the terminal, the TCI state corresponding to at least one (e.g., four) CSI-RS or SSB having a large L1-RSRP.

Further, the base station indicates, to the terminal, resource allocation information of PDSCH and a specific TCI state using downlink control information (DCI) (e.g., DCI format 1_1). For example, the base station may indicate, to the terminal, the TCI state corresponding to the CSI-RS or the SSB having the largest L1-RSRP from among the TCI states activated by MAC-CE.

The terminal decodes PDSCH using the spatial information based on the resource allocation information of PDSCH and the TCI state indicated by DCI. For example, in the example of FIG. 5, in a case where the L1-RSRP of the CSI-RS#2, the CSI-RS#3, and the CSI-RS#4 having a large L1-RSRP are reported to the base station, the base station configures TCI #2 and TCI #3 and TCI #4 for the terminal using MAC-CE. Further, the base station indicates, to the terminal, a specific TCI state (e.g., TCI #3) having a large L1-RSRP and the resource allocation information of PDSCH from among the TCI states set by MAC-CE using DCI. The terminal specifies the spatial information from the indicated TCI #3 and decodes PDSCH based on the specified spatial information and the resource allocation information of PDSCH.

### [Overview of Communication System]

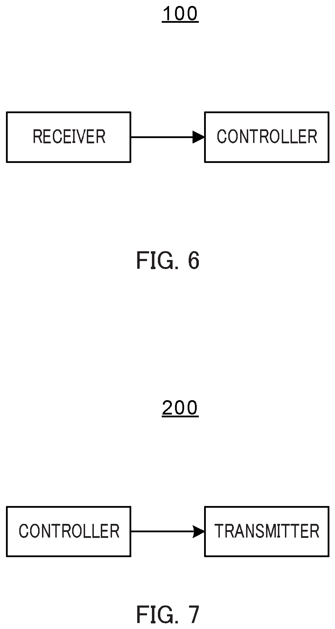

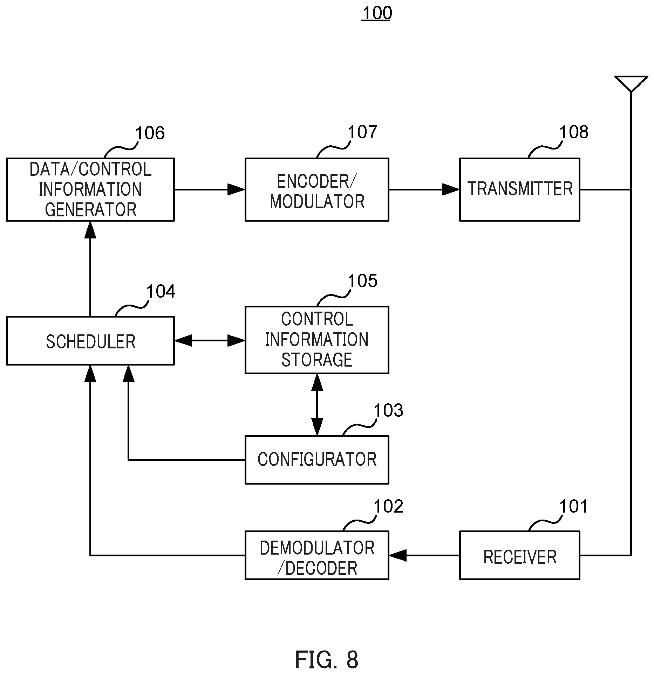

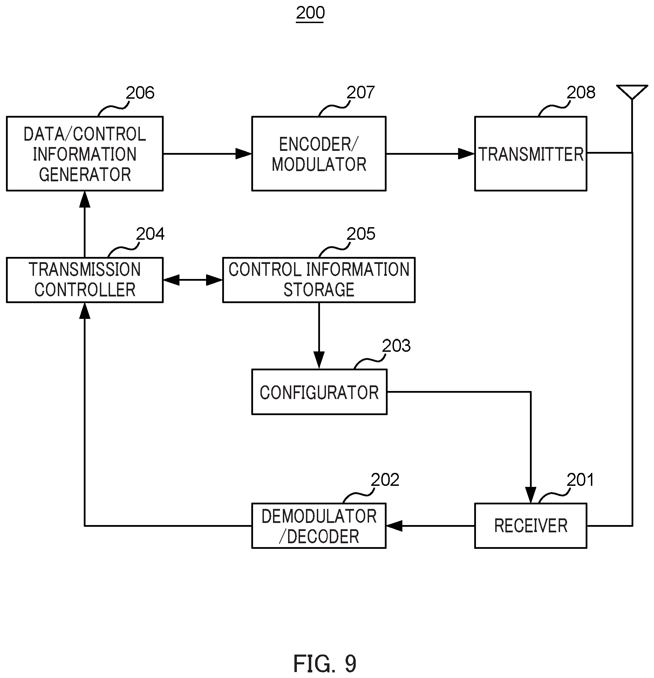

A communication system according to one aspect of the present disclosure may include, for example, base station 100 (e.g., gNB) illustrated in FIGS. 6 and 8 and terminal 200 (e.g., UE) illustrated in FIGS. 7 and 9. A plurality of base stations 100 and terminals 200 may be present in the communication system.

FIG. 6 is a block diagram illustrating a configuration example of a part of base station 100 according to an aspect of the present disclosure. In base station 100 illustrated in FIG. 6, a receiver (e.g., corresponding to reception circuitry) receives information (CLI measurement value) related to cross-link interference measured using a beam for measuring (hereinafter, may be referred to as "measurement beam") terminal-to-terminal cross-link interference (terminal-to-terminal CLI) determined based on at least one of the transmission configuration indication state (TCI state) and the reception beam of terminal 200. A controller (e.g., corresponding to control circuitry) performs scheduling for the terminal based on the received information.

FIG. 7 is a block diagram illustrating a configuration example of a part of terminal 200 according to an aspect of the present disclosure. In terminal 200 illustrated in FIG. 7, the controller (e.g., corresponding to control circuitry) determines a measurement beam for terminal-to-terminal cross-link interference (terminal-to-terminal CLI) based on at least one of the transmission configuration indication state (TCI state) and the reception beam of terminal 200. A transmitter (e.g., transmission circuitry) transmits information related to the cross-link interference measured using the measurement beam.

### [Configuration of Base Station]

FIG. 8 is a block diagram illustrating a configuration example of base station 100 according to one aspect of the present disclosure. In FIG. 8, base station 100 includes receiver 101, demodulator/decoder 102, configurator 103, scheduler 104, control information storage 105, data/control information generator 106, encoder/modulator 107, and transmitter 108.

For example, at least one of demodulator/decoder 102, configurator 103, scheduler 104, control information storage 105, data/control information generator 106, or encoder/modulator 107 may be included in the controller illustrated in FIG. 6, and receiver 101 may be included in the receiver illustrated in FIG. 6.

Receiver 101 performs, for example, reception processing such as downconversion or A/D conversion on a received signal received through an antenna and outputs the reception signal after the reception processing to demodulator/decoder 102.

For example, demodulator/decoder 102 demodulates and decodes the received signal input from receiver 101 and outputs the decoding result to scheduler 104.

Configurator 103 determines, for example, a configuration related to the beam-based terminal-to-terminal CLI measurement. For example, configurator 103 may determine the configuration related to the beam-based terminal-to-terminal CLI measurement based on control information related to the configuration of the terminal-to-terminal CLI measurement resource and the TCI state input from control information storage 105. Configurator 103 outputs the information related to the configuration of the beam-based terminal-to-terminal CLI measurement to scheduler 104 and control information storage 105.

Scheduler 104 may perform, for example, scheduling for terminal 200. Scheduler 104 performs scheduling of transmission and reception of each terminal 200 based on, for example, at least one of a decoding result input from demodulator/decoder 102, information related to the configuration of the beam-based terminal-to-terminal CLI measurement input from configurator 103, or control information input from control information storage 105, and issues an instruction to generate at least one of data and control information to data/control information generator 106. Further, scheduler 104 outputs the scheduling information to control information storage 105.

Control information storage 105 stores, for example, control information related to the configuration related to the terminal-to-terminal CLI measurement (e.g., configuration of a resource for measurement transmitted from the aggressor UE) and the configuration related to the beam (e.g., TCI state n) input from configurator 103 and scheduler 104. Control information storage 105 may output the stored information to each component unit (e.g., configurator 103 and scheduler 104) of base station 100 as necessary.

Data/control information generator 106 generates at least one of data and control information in accordance with the instruction from scheduler 104 and outputs a signal including the generated data or control information to encoder/modulator 107, for example. Note that the generated data and control information may include at least one of higher layer signaling information and downlink control information.

Encoder/modulator 107 encodes and modulates, for example, the signal input from data/control information generator 106 and outputs the modulated signal to transmitter 108.

Transmitter 108 performs transmission processing, such as D/A conversion, up-conversion, or amplification on the signal input from encoder/modulator 107, for example, and transmits a radio signal obtained by the transmission processing to terminal 200 through an antenna.

### [Configuration of Terminal]

FIG. 9 is a block diagram illustrating a configuration example of terminal 200 according to one aspect of the present disclosure. In FIG. 9, terminal 200 includes receiver 201, demodulator/decoder 202, configurator 203, transmission controller 204, control information storage 205, data/control information generator 206, encoder/modulator 207, and transmitter 208.

For example, at least one of demodulator/decoder 202, configurator 203, transmission controller 204, control information storage 205, data/control information generator 206, and encoder/modulator 207 may be included in the controller illustrated in FIG. 7, and transmitter 208 may be included in the transmitter illustrated in FIG. 7.

For example, receiver 201 performs reception processing, such as down-conversion or A/D conversion on the received signal received via an antenna and outputs the received signal after the reception processing to demodulator/decoder 202. Further, receiver 201 switches the reception beam based on information related to the reception beam switching configuration input from configurator 203.

Demodulator/decoder 202 demodulates and decodes, for example, a received signal input from receiver 201, and outputs the decoding result to transmission controller 204. Further, in a case where the decoding result includes information related to the terminal-to-terminal CLI measurement resource, demodulator/decoder 202 calculates the terminal-to-terminal CLI measurement value based on the information and outputs the terminal-to-terminal CLI measurement value to transmission controller 204.

Configurator 203 configures the reception beam (e.g., switching of the reception beam) for receiving the signal (e.g., SRS or the like) of the terminal-to-terminal CLI measurement resource based on the control information (e.g., configuration related to the beam-based terminal-to-terminal CLI measurement and the beam) input from control information storage 205 and outputs the information related to the configured reception beam switching configuration to transmission controller 204.

Transmission controller 204 outputs the signaling information (e.g., information related to the beam-based terminal-to-terminal CLI measurement resource, information related to the report configuration, and the like) included in the decoding result input from demodulator/decoder 202 to control information storage 205. Further, transmission controller 204 may issue an instruction to generate at least one of data and control information to data/control information generator 206 based on, for example, the control information input from control information storage 205 or the decoding result (e.g., downlink control information) input from demodulator/decoder 202 and the terminal-to-terminal CLI measurement value.

Control information storage 205 stores, for example, the control information (e.g., information related to the resource or the reception beam configuration of the beam-based terminal-to-terminal CLI measurement, information related to the report configuration) input from transmission controller 204 and outputs the stored information to each configuration unit (e.g., configurator 203 and transmission controller 204) as necessary.

Data/control information generator 206 generates data or control information, for example, in accordance with the instruction from transmission controller 204. Data/control information generator 206 outputs a signal including the generated data or control information to encoder/modulator 207.

Encoder/modulator 207 encodes and modulates the signal input from data/control information generator 206 and outputs the modulated transmission signal to transmitter 208, for example.

Transmitter 208 performs transmission processing, such as D/A conversion, up-conversion, and/or amplification on the signal input from encoder/modulator 207 and transmits a radio signal obtained by the transmission processing to base station 100 from an antenna, for example.

### [Operations of Base Station 100 and Terminal 200]

Exemplary operations of base station 100 and terminal 200 having the above configurations will be described.

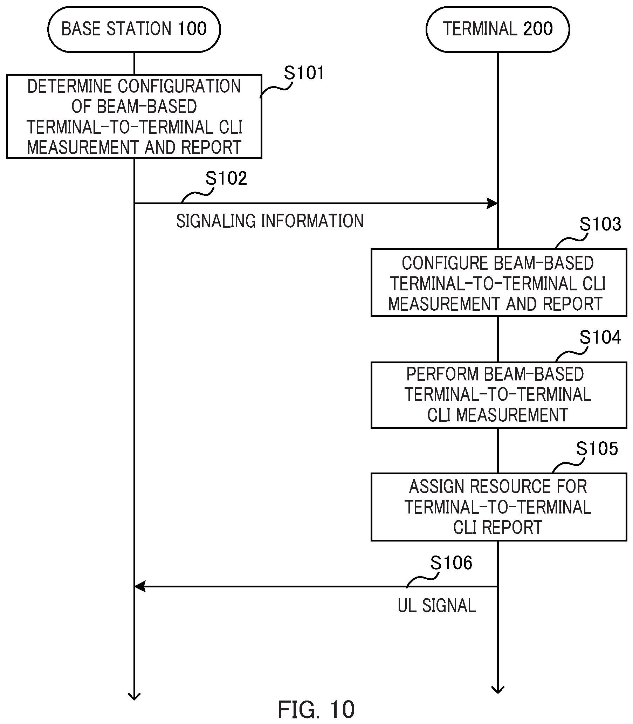

FIG. 10 is a sequence diagram illustrating an operation example of base station 100 and terminal 200.

In FIG. 10, base station 100 determines the configuration (configuration) related to the beam-based terminal-to-terminal CLI measurement and the report (S101).

Base station 100 transmits higher layer signaling information including the configuration thus determined to terminal 200 (S102).

Terminal 200 performs the configuration of the beam-based terminal-to-terminal CLI measurement and report based on the configuration from base station 100 (S103).

Terminal 200 performs the beam-based terminal-to-terminal CLI measurement based on, for example, the configuration of the beam-based terminal-to-terminal CLI measurement (S104). Further, terminal 200 generates a UCI bit related to the terminal-to-terminal CLI measurement value based on the configuration of the beam-based terminal-to-terminal CLI report and assigns the UCI bit to a resource for the report (S105). Then, terminal 200 transmits the UL signal of the resource to which the UCI bit is assigned to base station 100 (S106).

### [Beam-based Terminal-to-Terminal CLI Measurement]

Next, an example of a method of the beam-based terminal-to-terminal CLI measurement according to one non-limiting exemplary embodiment of the present disclosure will be described.

For example, an indication method of the beam-based terminal-to-terminal CLI measurement by base station 100 (e.g., configurator 103 and scheduler 104) and an operation example of terminal 200 (e.g., demodulator/decoder 202, configurator 203, and transmission controller 204) will be described.

In the present embodiment, for example, the beam-based terminal-to-terminal CLI measurement based on at least one of the configuration (e.g., restriction) of the TCI state and the reception beam will be described. For example, in the present embodiment, as a method of the beam-based terminal-to-terminal CLI measurement, a measurement method (Method 1) related to a plurality of TCI states, a measurement method (Method 2) related to the current TCI state configured for transmission of PDSCH or PDCCH, and a method (Method 3) related to the reception beam of the victim UE will be described as examples.

### <Method 1>

In the beam-based terminal-to-terminal CLI measurement method according to Method 1, base station 100 indicates or configures one or a plurality of TCI states in terminal 200, and terminal 200 performs the beam-based terminal-to-terminal CLI measurement using the reception beam associated with the TCI state indicated or configured from base station 100.

As the beam-based terminal-to-terminal CLI measurement method according to Method 1, a method (Method 1-1) of measuring the beam-based terminal-to-terminal CLI using the TCI state configured for transmission of PDSCH and a method (Method 1-2) of measuring the beam-based terminal-to-terminal CLI using one or a plurality of TCI states indicated or configured from base station 100 for the beam-based terminal-to-terminal CLI measurement will be described as examples.

### <Method 1-1>

In the beam-based terminal-to-terminal CLI measurement method according to Method 1-1, terminal 200 performs the beam-based terminal-to-terminal CLI measurement using the TCI state configured for transmission of PDSCH. For example, terminal 200 determines the reception beam (measurement beam) for the terminal-to-terminal CLI measurement based on a part (one or some) of a plurality of TCI states related to the PDSCH configured for terminal 200.

For example, base station 100 configures (or activates) one or a plurality of (e.g., a maximum of 8) TCI states from among a plurality of (e.g., a maximum of 128) TCI states configured for terminal 200 using MAC-CE for PDSCH transmission using the TCI state.

Terminal 200 measures the terminal-to-terminal CLI for each reception beam associated with the TCI state, using one or a plurality of TCI states (e.g., TCI state activated by MAC-CE) configured by MAC-CE and reports the CLI measurement value to base station 100.

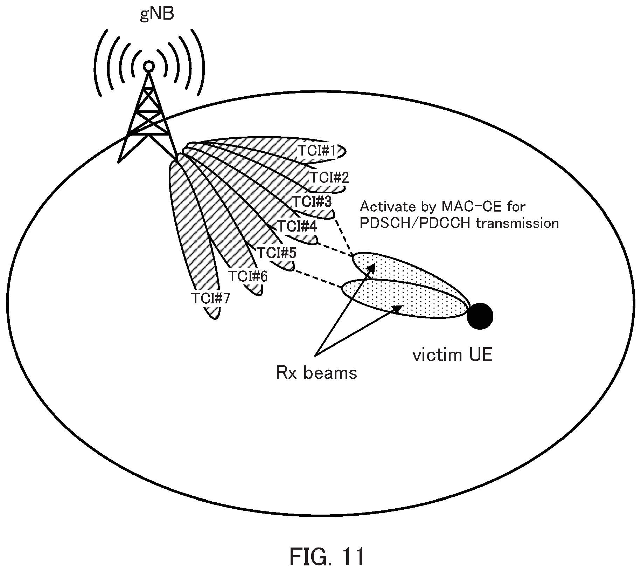

FIG. 11 illustrates an example of the beam-based terminal-to-terminal CLI measurement according to Method 1-1.

In the example of FIG. 11, base station 100 (e.g., gNB) configures TCI #3, TCI #4, and TCI #5 among TCI #1 to TCI #7 configured for transmission of PDSCH for terminal 200 via MAC-CE.

Terminal 200 (e.g., victim UE) specifies (or determines) the reception beam associated with TCI #3, TCI #4, and TCI #5 configured by MAC-CE, receives the resource for CLI measurement (e.g., SRS or the like) from the aggressor UE using the specified reception beam, and measures the terminal-to-terminal CLI.

For example, in a case where a plurality of TCI states is configured, terminal 200 switches the reception beam in a case of measuring the beam-based terminal-to-terminal CLI. For example, in FIG. 11, the terminal-to-terminal CLI is measured using the reception beam associated with TCI #3 at a certain time, the terminal-to-terminal CLI is measured using the reception beam associated with TCI #4 at a different time, and the terminal-to-terminal CLI is measured using the reception beam associated with TCI #5 at a further different time. Terminal 200 reports the terminal-to-terminal CLI measurement value to base station 100.

As described above, in Method 1-1, in the beam-based terminal-to-terminal CLI measurement, the terminal-to-terminal CLI measurement using a reception beam associated with a part of TCI states among a plurality of the TCI states configured for terminal 200 is performed. As a result, the measurement (or report) overhead can be reduced as compared with the measurement for all the reception beams configured in terminal 200 (e.g., victim UE).

Further, in Method 1-1, since the TCI state configured for transmission of PDSCH is reused in the beam-based terminal-to-terminal CLI measurement, base station 100 does not need to perform additional signaling for the beam-based terminal-to-terminal CLI measurement, so that the signaling overhead can be reduced.

Further, terminal 200 performs the terminal-to-terminal CLI measurement using a plurality of reception beams and reports the terminal-to-terminal CLI measurement value to base station 100. Here, for example, the TCI state configured by MAC-CE is likely to be used for receiving the PDSCH transmitted later. Therefore, for example, in the TCI state configured by MAC-CE, a beam having a large beam gain may be selected. Therefore, base station 100 can perform flexible scheduling by performing the scheduling based on the terminal-to-terminal CLI measurement result of a plurality of reception beams reported from terminal 200. For example, in a case of selecting a specific TCI state to be indicated in a case of transmitting PDSCH, base station 100 can appropriately select the TCI state (or QCL parameter or beam) based on the terminal-to-terminal CLI measurement result for the plurality of TCI states.

In Method 1-1, the TCI states for PDSCH have been described, but Method 1-1 can be similarly applied to the TCI states for PDCCH.

### <Method 1-2>

In the beam-based terminal-to-terminal CLI measurement method according to Method 1-2, terminal 200 performs the beam-based terminal-to-terminal CLI measurement using a TCI state for the beam-based terminal-to-terminal CLI measurement configured (or indicated or instructed) by base station 100. For example, terminal 200 determines the reception beam (measurement beam) for the terminal-to-terminal CLI measurement based on the TCI state for the beam-based terminal-to-terminal CLI measurement different from the TCI state related to a DL channel, such as PDSCH or PDCCH.

For example, base station 100 may configure the TCI state for the beam-based terminal-to-terminal CLI measurement in terminal 200 by RRC signaling. The configuration of the TCI state for the beam-based terminal-to-terminal CLI measurement is not limited to RRC signaling and may be indicated to terminal 200 by MAC-CE or DCI.

Terminal 200 (e.g., victim UE) measures the terminal-to-terminal CLI for each reception beam associated with the TCI state, using one or a plurality of TCI states configured by base station 100 and reports the terminal-to-terminal CLI measurement value to base station 100.

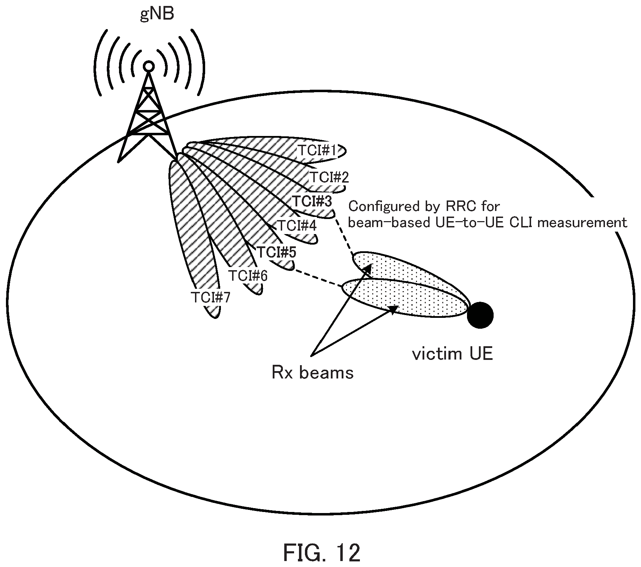

FIG. 12 illustrates an example of the beam-based terminal-to-terminal CLI measurement according to Method 1-2.

In the example of FIG. 12, base station 100 (e.g., gNB) configures TCI #3 and TCI #5 for the beam-based terminal-to-terminal CLI measurement for terminal 200.

Terminal 200 (e.g., victim UE) specifies (or determines) a reception beam associated with TCI #3 and TCI #5 configured by base station 100, receives a resource for CLI measurement (e.g., SRS or the like) from the aggressor UE using the specified reception beam and measures the terminal-to-terminal CLI.

For example, in a case where a plurality of TCI states is configured, terminal 200 switches the reception beam in a case of measuring the beam-based terminal-to-terminal CLI. For example, in FIG. 12, the terminal-to-terminal CLI is measured using the reception beam associated with TCI #3 at a certain time, and the terminal-to-terminal CLI is measured using the reception beam associated with TCI #5 at a different time. Terminal 200 reports the terminal-to-terminal CLI measurement value to base station 100.

For example, base station 100 may select a TCI state related to the DL transmission based on the terminal-to-terminal CLI measurement value reported from terminal 200. For example, in FIG. 12, in a case where the beam gains of TCI #3 and TCI #4 are sufficiently large (e.g., equal to or larger than a threshold value) and the terminal-to-terminal CLI measurement value of TCI #3 is large (e.g., equal to or larger than a threshold value), base station 100 may decide to perform the DL transmission using TCI #5. As a result, the DL communication can be performed while avoiding the influence of the terminal-to-terminal CLI.

Further, since base station 100 can configure a TCI state for the beam-based terminal-to-terminal CLI measurement, for example, flexible configuration of the beam-based terminal-to-terminal CLI measurement can be performed as compared Method 1-1 (in a case of using the configuration of the TCI state for PDSCH transmission).

For example, in a case where base station 100 has information (e.g., position or beam pair) on the victim UE and aggressor UE, the victim UE does not need to measure the terminal-to-terminal CLI corresponding to all the usable TCI states (or activated TCI states), and may measure the terminal-to-terminal CLI corresponding to a part of the TCI states (e.g., a part of directions or a part of reception beams) based on the information on the victim UE and aggressor UE. As a result, the measurement overhead in the beam-based terminal-to-terminal CLI measurement and the overhead of the terminal-to-terminal CLI report can be reduced.

### <Method 2>

In the beam-based terminal-to-terminal CLI measurement method according to Method 2, terminal 200 performs the beam-based terminal-to-terminal CLI measurement using a reception beam of a TCI state related to the current TCI state configured for transmission of PDSCH or PDCCH.

As the beam-based terminal-to-terminal CLI measurement method according to Method 2, a method (Method 2-1) of measuring the beam-based terminal-to-terminal CLI using only the current (or latest) TCI state configured for transmission of PDSCH and a method (Method 2-2) of measuring the beam-based terminal-to-terminal CLI using the current (latest) TCI state configured for transmission of PDSCH and N TCI states around the TCI state will be described as examples.

### <Method 2-1>

In the beam-based terminal-to-terminal CLI measurement method according to Method 2-1, terminal 200 performs the beam-based terminal-to-terminal CLI measurement using the current (latest) TCI state (e.g., the TCI state indicated by DCI) configured for transmission of PDSCH or PDCCH.

For example, terminal 200 determines the reception beam (measurement beam) for the terminal-to-terminal CLI measurement based on the TCI state currently used for the communication of DL channel (e.g., PDSCH or PDCCH).

In Method 2-1, since the TCI state configured for transmission of PDSCH or PDCCH is used (or reused) in the beam-based terminal-to-terminal CLI measurement, base station 100 does not need to transmit the signaling for the beam-based terminal-to-terminal CLI measurement.

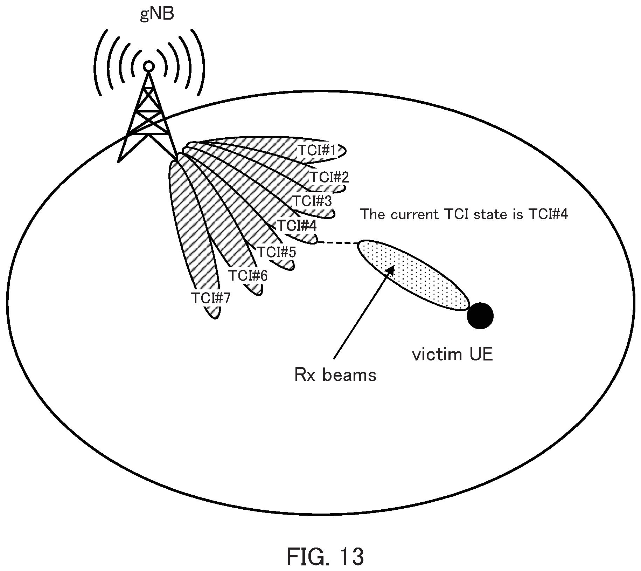

FIG. 13 illustrates an example of the beam-based terminal-to-terminal CLI measurement according to Method 2-1.

In the example of FIG. 13, among a plurality of TCI states (e.g., including TCI #1 to TCI #7) configured in terminal 200, the current (or latest) TCI state configured for the PDSCH reception of terminal 200 is TCI #4.

In this case, terminal 200 (e.g., victim UE) receives the resource for CLI measurement (e.g., SRS or the like) from the aggressor UE using the reception beam associated with TCI #4 and measures the terminal-to-terminal CLI.

According to Method 2-1, terminal 200 performs the terminal-to-terminal CLI measurement using the reception beam associated with the currently used TCI state (e.g., one TCI state). For example, in Method 2-1, in the beam-based terminal-to-terminal CLI measurement, the terminal-to-terminal CLI measurement using the reception beam associated with the current (or latest) TCI state among a plurality of TCI states configured (or activated) for terminal 200 is performed. As a result, the measurement (or report) overhead can be reduced as compared with the measurement for all the reception beams configured for terminal 200 (e.g., victim UE). Further, terminal 200 does not need to switch the reception beam to perform the terminal-to-terminal CLI measurement. Therefore, according to Method 2-1, the measurement overhead of the terminal-to-terminal CLI measurement can be reduced.

Further, in Method 2-1, since the TCI state configured for transmission of PDSCH or PDCCH is reused in the beam-based terminal-to-terminal CLI measurement, base station 100 does not need to perform additional signaling for the beam-based terminal-to-terminal CLI measurement, so that the signaling overhead can be reduced.

### <Method 2-2>

In the beam-based terminal-to-terminal CLI measurement method according to Method 2, terminal 200 performs the beam-based terminal-to-terminal CLI measurement using the current (latest) TCI state (e.g., TCI state indicated by DCI) configured for transmission of PDSCH or PDCCH and the N TCI states around the TCI state.

For example, terminal 200 determines the reception beam (measurement beam) for the terminal-to-terminal CLI measurement based on the TCI state currently used for the communication of the DL channel (e.g., PDSCH or PDCCH) and a TCI state (e.g., N TCI states in surroundings) corresponding to a beam adjacent to the TCI state.

Here, N may be defined by the specification (standard), may be configured in terminal 200 by RRC signaling, or may be indicated to terminal 200 by MAC-CE or DCI. The value of N may be configured to an integer equal to or greater than 0, for example.

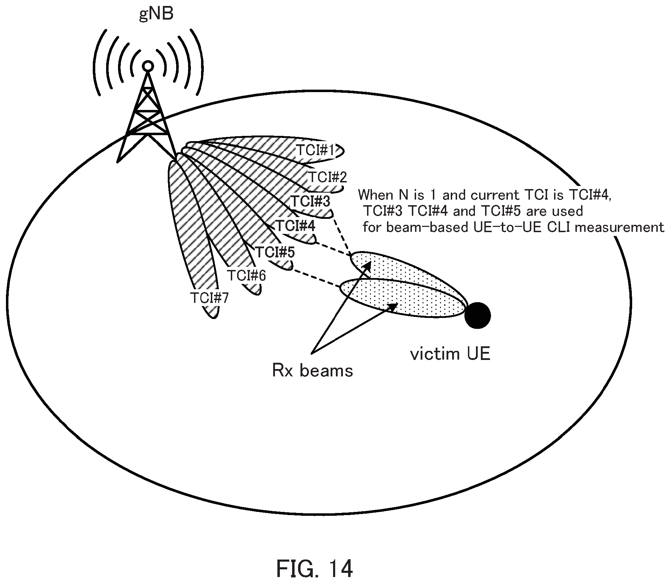

FIG. 14 illustrates an example of the beam-based terminal-to-terminal CLI measurement according to Method 2-2.

In the example of FIG. 14, among a plurality of TCI states (e.g., including TCI #1 to TCI #7) configured for terminal 200, the current (latest) TCI state configured for PDSCH reception of terminal 200 is TCI #4. Further, for example, one TCI state (e.g., N = 1) in surroundings is configured for terminal 200 to be measured.

In this case, as illustrated in FIG. 14, terminal 200 (e.g., victim UE) receives a resource for CLI measurement (e.g., SRS or the like) from the aggressor UE using the reception beam associated with TCI #4 and the TCI state (the TCI state adjacent to both sides) around TCI #4, that is, TCI #3 and TCI #5, and measures the terminal-to-terminal CLI.

For example, in a case where a plurality of TCI states is configured, terminal 200 switches the reception beam in a case of measuring the beam-based terminal-to-terminal CLI. For example, in FIG. 14, the terminal-to-terminal CLI is measured using the reception beam associated with TCI #3 at a certain time, the terminal-to-terminal CLI is measured using the reception beam associated with TCI #4 at a different time, and the terminal-to-terminal CLI is measured using the reception beam associated with TCI #5 at a further different time. Terminal 200 reports the terminal-to-terminal CLI measurement value to base station 100.

For example, since base station 100 can flexibly adjust the number of TCI states (e.g., reception beams) for performing the terminal-to-terminal CLI measurement by the configuration of N, the measurement overhead of the beam-based terminal-to-terminal CLI can be reduced.

The N TCI states are not limited to the TCI states adjacent to the current TCI state as illustrated in FIG. 14 and may be TCI states away from the current TCI state.

### <Method 3>

In a beam-based terminal-to-terminal CLI measurement method according to Method 3, terminal 200 performs the beam-based terminal-to-terminal CLI measurement based on a reception beam of terminal 200.

As the beam-based terminal-to-terminal CLI measurement method according to Method 3, a method (Method 3-1) of measuring the beam-based terminal-to-terminal CLI using the reception beam configured or indicated from base station 100 to terminal 200, a method (Method 3-2) of measuring the beam-based terminal-to-terminal CLI by reporting the information on the reception beam from terminal 200 to base station 100, and Method (Method 3) of measuring the beam-based terminal-to-terminal CLI based on the transmission beam of terminal 200 will be described as examples.

### <Method 3-1>

In the beam-based terminal-to-terminal CLI measurement method according to Method 3-1, base station 100 configures or indicates, to terminal 200, one or a plurality of reception beams, and terminal 200 performs the beam-based terminal-to-terminal CLI measurement using the reception beam configured or indicated by base station 100.

As the indication method of the reception beam, for example, information (ID) for identifying the reception beam of terminal 200 may be configured.

Base station 100 may configure or indicate, to terminal 200, the reception beam ID of the reception beam used for the beam-based terminal-to-terminal CLI measurement. The reception beam ID may be configured by, for example, RRC signaling or may be indicated by MAC-CE or DCI.

Terminal 200 determines the reception beam (measurement beam) for the terminal-to-terminal CLI measurement based on the reception beam ID configured or indicated by base station 100, and performs the terminal-to-terminal CLI measurement using the determined reception beam.

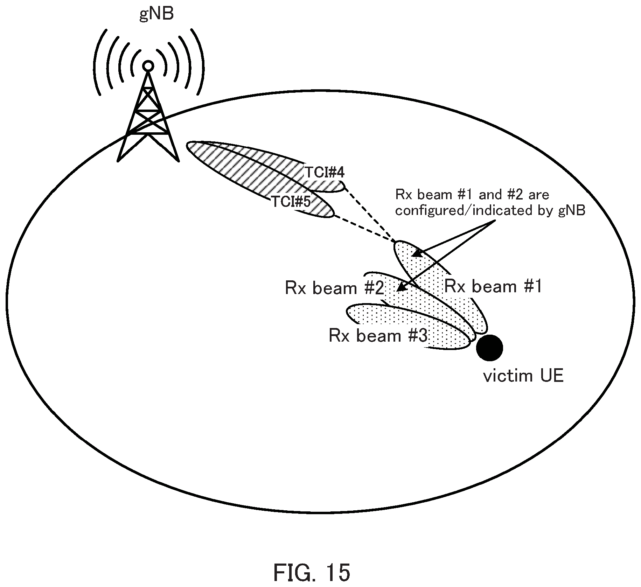

FIG. 15 illustrates an example of the beam-based terminal-to-terminal CLI measurement according to Method 3-1.

In the example of FIG. 15, the reception beam IDs are configured to Rx beam #1, Rx beam #2, and Rx beam #3 for three reception beams usable by terminal 200.

In the example of FIG. 15, base station 100 configures or indicates, to terminal 200, Rx beam #1 and Rx beam #2 for the beam-based terminal-to-terminal CLI measurement.

In this case, terminal 200 receives the resource for CLI measurement (e.g., SRS or the like) from the aggressor UE using the reception beams of Rx beam #1 and Rx beam #2, and measures the terminal-to-terminal CLI.

For example, in a case where a plurality of TCI states is configured, terminal 200 switches the reception beam in a case of measuring the beam-based terminal-to-terminal CLI. For example, in FIG. 15, the terminal-to-terminal CLI is measured using the reception beam associated with Rx beam #1 at a certain time, and the terminal-to-terminal CLI is measured using the reception beam associated with Rx beam #2 at a different time. Terminal 200 reports the terminal-to-terminal CLI measurement value to base station 100.

As described above, in Method 3-1, the information (e.g., reception beam ID) on the reception beam for the terminal-to-terminal CLI measurement is configured or indicated to terminal 200 instead of the TCI state (e.g., parameter for PDSCH or PDCCH reception) as in Method 1 or Method 2, so that the measurement beam for the terminal-to-terminal CLI measurement can be flexibly configured, and the measurement overhead can be reduced.

For example, the adjacent TCI states may be associated with the same reception beam. For example, in FIG. 15, TCI #4 and TCI #5 are associated with the same reception beam (Rx beam #1). Therefore, in the configuration of the measurement beam by the indication of the TCI state, terminal 200 may measure the same reception beam twice. For example, in the example of FIG. 15, in a case where TCI #4 and TCI #5 are indicated for the configuration of the measurement beam, terminal 200 performs the measurement of Rx beam #1 twice in a duplicated manner for each TCI state. Meanwhile, as in Method 3-1, in the configuration of the measurement beam by the indication of the reception beam, the measurement beam can be configured without duplication as in the configuration based on the TCI state, so that the measurement overhead can be reduced.

### <Method 3-2>

In the beam-based terminal-to-terminal CLI measurement method according to Method 3-2, terminal 200 reports the information on the reception beam to base station 100.

As a method of reporting the information on the reception beam from terminal 200 to base station 100, for example, a method of using a CSI report may be used. For example, in a case of reporting L1-RSRP of CSI-RS or SSB in the CSI report, the information on the reception beam may be additionally reported.

For example, the CSI report may include an ID of the CSI-RS resource (e.g., CSI-RS corresponding to the TCI) and a measurement value (e.g., L1-RSRP) in each CSI-RS resource.

Further, for example, the information on the reception beam to be reported may include information for distinguishing whether the information (e.g., L1-RSRP of each CSI-RS resource) to be reported in the CSI report is information using the same reception beam or information using different reception beams. The information for distinguishing the information on the reception beam may be represented by a flag. For example, in a case where the flags have the same value, L1-RSRP of the corresponding CSI-RS resource means L1-RSRP measured using the same reception beam. Meanwhile, in a case where the flags have different values, L1-RSRP of the corresponding CSI-RS resource means L1-RSRP measured using different reception beams.

Base station 100 determines the TCI state used for the beam-based terminal-to-terminal CLI measurement based on, for example, the information (e.g., flag) on the reception beam included in the CSI report and configures or indicates, to terminal 200, the determined TCI state. For example, in a case where base station 100 specifies that the measurement values (e.g., L1-RSRP) related to a plurality of (e.g., two) different TCI states are measured using the same reception beam based on the information (e.g., flag) on the reception beam, base station 100 may not configure or indicate all of the plurality of TCI states as the TCI state used for the beam-based terminal-to-terminal CLI measurement and may configure or indicate any one of the TCI states.

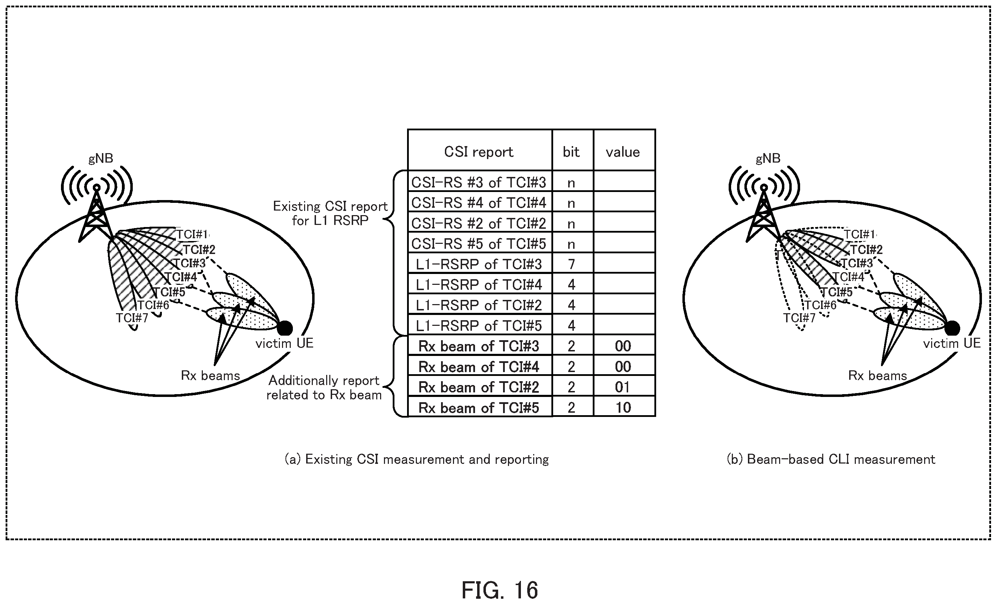

FIG. 16 illustrates an example of the beam-based terminal-to-terminal CLI measurement according to Method 3-2.

In FIG. 16, (a) illustrates an example of the CSI report reported from terminal 200 to base station 100, and (b) illustrates an example of a TCI state used for the beam-based terminal-to-terminal CLI measurement, which is configured or indicated from base station 100 to terminal 200.

In FIG. 16 (a), terminal 200 measures L1-RSRP using a plurality of CSI-RSs (e.g., CSI-RS#1 to CSI-RS#7 associated with TCI #1 to TCI #7), and reports the top four CSI-RSs (e.g., CSI-RS#3, CSI-RS#4, CSI-RS#2, and CSI-RS#5) having a large L1-RSRP and the corresponding L1-RSRP using the CSI report.

Further, as illustrated in FIG. 16 (a), terminal 200 additionally reports the information on the reception beam in the CSI report. In the example of FIG. 16 (a), since TCI #3 and TCI #4 are associated with the same reception beam, the same flag (e.g., "00" of 2 bits) is reported, and since TCI #2 and TCI #5 are associated with different beams, different flags (e.g., "01" and "10" of 2 bits) are reported.

Base station 100 acquires the reception beam information of terminal 200 associated with the TCI state by the received CSI report. For example, as illustrated in FIG. 16 (a), since the flags of the reception beams corresponding to TCI #3 and TCI #4 are the same ("00"), base station 100 specifies that TCI #3 and TCI #4 are associated with the same reception beam.

Therefore, base station 100 may select any one of TCI #3 and TCI #4 as the TCI state for the beam-based terminal-to-terminal CLI measurement and may not select the other as the TCI state for the beam-based terminal-to-terminal CLI measurement. For example, in the example of FIG. 16 (b), base station 100 may not configure or indicate TCI #4 for the beam-based terminal-to-terminal CLI measurement and may configure or indicate the TCI states (e.g., TCI #2, TCI #3, and TCI #5) associated with different reception beams for the beam-based terminal-to-terminal CLI measurement.

As described above, in Method 3-2, terminal 200 transmits the information (e.g., the flag) on a plurality of reception beams to base station 100, and base station 100 determines the reception beam (e.g., measurement beam) for the terminal-to-terminal CLI measurement based on a TCI state (e.g., TCI state in which the corresponding reception beams do not overlap) determined based on the information (e.g., flag) on the reception beam.

According to Method 3-2, since the measurement beam can be configured without newly defining an ID (e.g., Rx beam #1) for the reception beam, the measurement overhead can be reduced.

In the above example, a case where base station 100 configures or indicates the TCI state corresponding to the reception beam used for the beam-based terminal-to-terminal CLI measurement has been described, but the present disclosure is not limited to this. Base station 100 may configure or indicate, to terminal 200, the reception beam ID of the reception beam used for the beam-based terminal-to-terminal CLI measurement as in Method 3-1 based on a flag reported by the CSI report.

Further, the configuration of the CSI report is not limited to the example illustrated in FIG. 16 (a), and a configuration in which the number of reported CSI-RSs (four in FIG. 16 (a)) and at least one of the content to be reported (CSI-RS, L1-RSRP, and Rx beam) are different may be used. For example, terminal 200 may report the reception beam ID corresponding to the information on each reception beam instead of a flag.

Further, as another method of Method 3-2, terminal 200 may select the reception beam (measurement beam) used by terminal 200 for terminal-to-terminal CLI report and may report the information on the measurement beam to base station 100 in a case of the terminal-to-terminal CLI report.

In this method, since terminal 200 selects the reception beam, the reception beam used for the measurement from base station 100 to terminal 200 does not need to be configured or indicated. Further, in a case of reporting the measurement result, terminal 200 may report the ID of the resource for terminal-to-terminal CLI measurement (e.g., SRS), the measurement value (e.g., SRS-RSRP) in the resource for terminal-to-terminal CLI measurement, and the information on the reception beam used for the measurement. The information on the reception beam used for the measurement may be, for example, a TCI state ID associated with the reception beam, or a reception beam ID in a case where the ID is configured in the reception beam of terminal 200.

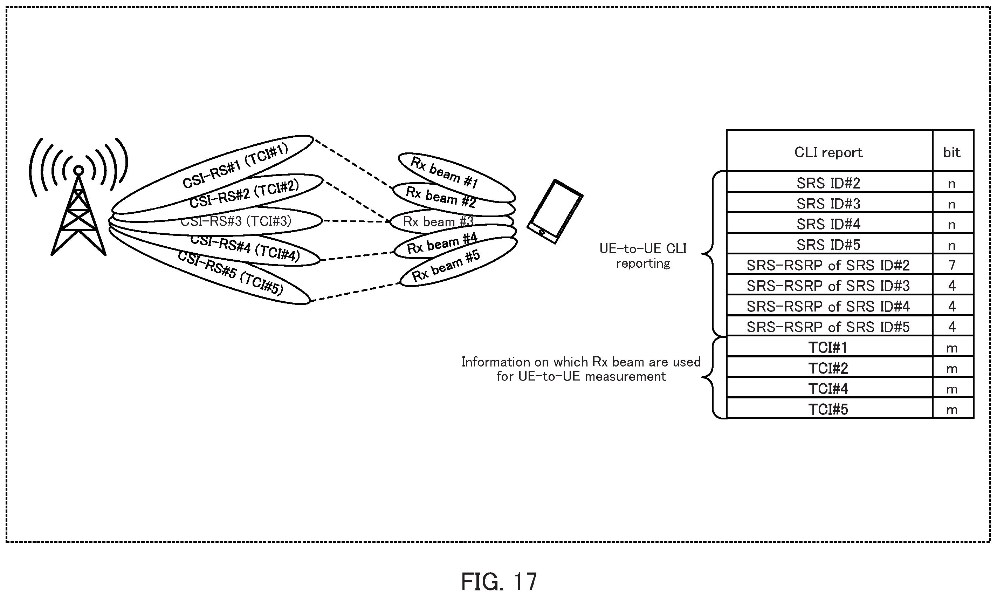

FIG. 17 illustrates an example of a method of selecting a reception beam measured by terminal 200.

In the example of FIG. 17, terminal 200 performs the beam-based terminal-to-terminal CLI measurement using the reception beams of Rx beam #1 to #5. For example, terminal 200 receives the SRS of the SRS ID #1 using Rx beam #1 and measures SRS-RSRP (SRS-RSRP of SRS ID#1). The same applies to the other reception beams.

Further, in the example of FIG. 17, the top four SRS-RSRPs, SRS ID corresponding to SRS-RSRP, and the TCI state ID corresponding to SRS-RSRP (or SRS ID) may be reported by the terminal-to-terminal CLI report.

For example, in the terminal-to-terminal CLI report illustrated in FIG. 17, the SRS IDs are stored in the first to fourth rows in descending order of SRS-RSRPs, and the SRS-RSRPs corresponding to the SRS IDs are stored in the fifth to eighth rows. For example, in the example of FIG. 17, in a case where the SRS-RSRP of SRS ID#2 is the largest, the SRS ID#2 is stored in the first row, and the SRS-RSRP measured in the SRS ID#2 is stored in the fifth row in the terminal-to-terminal CLI report. Further, in the example of FIG. 17, in a case where the SRS-RSRP of SRS ID#3 is the second largest, SRS ID#3 is stored in the second row, and the SRS-RSRP measured in SRS ID#3 is stored in the sixth row in the terminal-to-terminal CLI report. Similarly, information is stored in the third and fourth rows and the seventh and eighth rows of the terminal-to-terminal CLI report illustrated in FIG. 17.

Further, in the ninth to twelfth rows of the terminal-to-terminal CLI report illustrated in FIG. 17, the TCI state ID associated with the reception beam used for the measurement of the SRS-RSRP (or reception of the SRS of each SRS ID) is stored. For example, in a case where Rx beam #2 is used for the reception of the SRS of SRS ID#2, TCI #1 associated with Rx beam #2 is stored in the ninth row of the terminal-to-terminal CLI report. Similarly, in a case where Rx beam #3 is used for the reception of the SRS of SRS ID#3, TCI #2 associated with Rx beam #3 is stored in the tenth row of the terminal-to-terminal CLI report. Similarly, TCI states are stored in the eleventh and twelfth rows of the terminal-to-terminal CLI report. In the terminal-to-terminal CLI report, the information (e.g., Rx beam ID) for identifying the reception beam may be stored instead of the TCI state.

With Method illustrated in FIG. 17, base station 100 does not need to perform the configuration or the indication of the measurement beam for the beam-based terminal-to-terminal CLI measurement, so that the signaling overhead can be reduced.

### <Method 3-3>

In the beam-based terminal-to-terminal CLI measurement method according to Method 3-3, terminal 200 measures the beam-based terminal-to-terminal CLI using the transmission beam of terminal 200. For example, terminal 200 determines the reception beam (measurement beam) for the terminal-to-terminal CLI measurement based on the reception beam corresponding to the transmission beam of terminal 200.

For example, in the existing uplink beam management, the transmission beam of terminal 200 used for the UL transmission is determined by using SRS transmission. In this case, terminal 200 transmits the SRS using a plurality of transmission beams, and base station 100 receives a plurality of SRSs to measure the beam gain. Then, base station 100 schedules which transmission beam is used for the UL transmission for terminal 200 based on the measurement result of the beam gain.

In Method 3-3, for example, terminal 200 measures the beam-based terminal-to-terminal CLI based on the transmission beam associated with the SRS used for the uplink beam management.

For example, base station 100 configures or indicate, to terminal 200, the SRS resource ID associated with the transmission beam of terminal 200. Terminal 200 receives the resource for CLI measurement (e.g., SRS or the like) from the aggressor UE using the same beam as the SRS resource configured or indicated by base station 100 and measures the terminal-to-terminal CLI. In this case, the same beam is used for the transmission beam and the reception beam of terminal 200.

According to Method 3-3, a new parameter (e.g., the ID for each reception beam) for the beam-based terminal-to-terminal CLI measurement does not need to be additionally configured.

The examples of the beam-based terminal-to-terminal CLI measurement method have been described above.

As described above, in the present embodiment, terminal 200 determines a measurement beam for a terminal-to-terminal CLI (e.g., reception beam) based on at least one of a TCI state and a reception beam of terminal 200 and transmits information on a measurement value of the terminal-to-terminal CLI measured using the determined measurement beam to base station 100. As a result, terminal 200 (e.g., victim UE) can appropriately determine the reception beam (measurement beam) of terminal 200 in the beam-based terminal-to-terminal CLI measurement and measure the terminal-to-terminal CLI, so that the measurement (or report) overhead can be reduced. Therefore, according to the present embodiment, terminal 200 can appropriately report the interference between the terminals.

Each embodiment of the present disclosure has been described thus far.

### (Other Embodiments)

The values of parameters, such as the number of beams, the number of resources (the number of CSI-RSs or the number of SSBs), the number of bits of indication information, the size or the value of a flag used in the above-described embodiment are only exemplary, and other values may be used.

### (Supplement)

Information indicating whether terminal 200 supports the functions, operations, or processes described in the above-described embodiments may be transmitted (or indicated) from terminal 200 to base station 100 as capability information or a capability parameter for terminal 200.

The capability information may include an information element (IE) individually indicating whether terminal 200 supports at least one of the functions, operations, or processes described in the above-described embodiments. Alternatively, the capability information may include an information element (IE) indicating whether terminal 200 supports a combination of any two or more of the functions, operations, or processes described in the above-described embodiments.

Base station 100 may determine (or assume) the function, operation, or process supported (or not supported) by terminal 200 of the transmission source of the capability information, based on the capability information received from terminal 200, for example. Base station 100 may perform an operation, processing, or control corresponding to a determination result based on the capability information. For example, base station 100 may control the configuration of the terminal-to-terminal CLI measurement and report based on the capability information received from terminal 200.

Note that the fact that terminal 200 does not support some of the functions, operations, or processes described in the above-described embodiments may be read as that some of the functions, operations, or processes are limited in terminal 200. For example, information or a request on such limitation may be indicated to base station 100.

Information on the capability or limitation of terminal 200 may be defined, for example, in the standard, or may be implicitly indicated to base station 100 in association with information known to base station 100 or information transmitted to base station 100.

### (Control Signal)

In the present disclosure, the downlink control signal (or downlink control information) related to the exemplary embodiment of the present disclosure may be a signal (or information) transmitted of a Physical Downlink Control Channel (PDCCH) in a physical layer, for example, or may be a signal (or information) transmitted through a Medium Access Control Control Element (MAC CE) of the higher layer or the Radio Resource Control (RRC). Further, the signal (or information) is not limited to being indicated by the downlink control signal, and may be predefined in the specifications (or standard) or may be pre-configured in a base station and a terminal.

In the present disclosure, the uplink control signal (or uplink control information) related to the exemplary embodiment of the present disclosure may be, for example, a signal (or information) transmitted through a PUCCH of the physical layer or a signal (or information) transmitted through a MAC CE of the higher layer or the RRC. Further, the signal (or information) is not limited to being indicated by the uplink control signal and may be specified by the specifications (or standards) in advance or may be preconfigured in a base station and a terminal. Further, the uplink control signal may be replaced with, for example, uplink control information (UCI), 1st stage sidelink control information (SCI), or 2nd stage SCI.

### (Base Station)

In one exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. Further, in side link communication, a terminal may play a role of a base station. Furthermore, instead of the base station, a relay apparatus that relays communication between a higher node and a terminal may be used. Moreover, a road side device may be used.

### (Uplink/Downlink/Sidelink)

One exemplary embodiment of the present disclosure may be applied to, for example, any of an uplink, a downlink, and a sidelink. For example, an exemplary embodiment of the present disclosure may be applied to uplink channels such as Physical Uplink Shared Channel (PUSCH), Physical Uplink Control Channel (PUCCH), and Physical Random Access Channel (PRACH), downlink channels such as Physical Downlink Shared Channel (PDSCH), PDCCH, and Physical Broadcast Channel (PBCH), or sidelink channels such as Physical Sidelink Shared Channel (PSSCH), Physical Sidelink Control Channel (PSCCH), and Physical Sidelink Broadcast Channel (PSBCH).

Note that the PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and PSBCH are examples of broadcast channels, and the PRACH is an example of a random access channel.

### (Data channel/Control channel)

One exemplary embodiment of the present disclosure may be applied to, for example, any of data channels and control channel. For example, the channels in an exemplary embodiment of the present disclosure may be replaced with any of data channels including PDSCH, PUSCH, and PSSCH and/or control channels including PDCCH, PUCCH, PBCH, PSCCH, and PSBCH.

### (Reference Signal)

In one exemplary embodiment of the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information-Reference Signal (CSI-RS), a Tracking Reference Signal (TRS), a Phase Tracking Reference Signal (PTRS), a Cell-specific Reference Signal (CRS), or a Sounding Reference Signal (SRS).

### (Time Intervals)

In one exemplary embodiment of the present disclosure, time resource units are not limited to one or a combination of slots and symbols, and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above, and may be other numbers of symbols.

### (Frequency Band)

One exemplary embodiment of the present disclosure may be applied to any of a licensed band and an unlicensed band.

### (Communication)

One exemplary embodiment of the present disclosure may be applied to any of communication between a base station and a terminal (Uu link communication), communication between a terminal and a terminal (Sidelink communication), and communication of a Vehicle to Everything (V2X). For example, the channel in an exemplary embodiment of the present disclosure may be replaced with the PSCCH, the PSSCH, the Physical Sidelink Feedback Channel (PSFCH), the PSBCH, the PDCCH, the PUCCH, the PDSCH, the PUSCH, or the PBCH.

Further, one exemplary embodiment of the present disclosure may be applied to any of a terrestrial network or a network other than a terrestrial network (NTN: Non-Terrestrial Network) using a satellite or a High Altitude Pseudo Satellite (HAPS). Further, an exemplary embodiment of the present disclosure may be applied to a network having a large cell size, and a terrestrial network with a large delay compared with a symbol length or a slot length, such as an ultra-wideband transmission network.

### (Antenna Port)

In one exemplary embodiment of the present disclosure, the antenna port refers to a logical antenna (antenna group) configured of one or more physical antennae. For example, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stacks>

3GPP has been working at the next release for the 5th generation cellular technology, simply called 5G, including the development of a new radio (NR) access technology operating in frequencies ranging up to 100 GHz. The first version of 5G standard was initially delivered in late 2017, which allows proceeding to trials and commercial deployments of 5G NR standard-compliant terminals, e.g., smartphones.

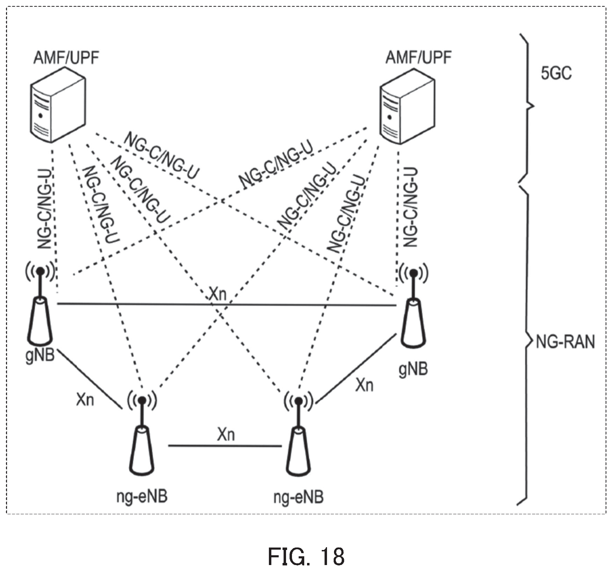

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 18 (see e.g., 3GPP TS 38.300 v15.6.0, section 4).

The user plane protocol stack for NR (see, e.g., 3GPP TS 38.300, section 4.4.1) includes the Packet Data Convergence Protocol (PDCP, see clause 6.4 of TS 38.300) Radio Link Control (RLC, see clause 6.3 of TS 38.300) and Medium Access Control (MAC, see clause 6.2 of TS 38.300) sublayers, which are terminated in the gNB on the network side. Additionally, a new access stratum (AS) sublayer (Service Data Adaptation Protocol: SDAP) is introduced above the PDCP (see, e.g., clause 6.5 of 3GPP TS 38.300). A control plane protocol stack is also defined for NR (see, e.g., TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For example, the Medium-Access-Control layer handles logical-channel multiplexing, and scheduling and scheduling-related functions, including handling of different numerologies.

The physical layer (PHY) is, for example, responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For example, the physical channels include a Physical Random Access Channel (PRACH), Physical Uplink Shared Channel (PUSCH), and Physical Uplink Control Channel (PUCCH) as uplink physical channels, and a Physical Downlink Shared Channel (PDSCH), Physical Downlink Control Channel (PDCCH), and Physical Broadcast Channel (PBCH) as downlink physical channels.

Use cases/deployment scenarios for NR could include enhanced mobile broadband (eMBB), ultra-reliable low-latency communications (URLLC), massive machine type communication (mMTC), which have diverse requirements in terms of data rates, latency, and coverage. For example, the eMBB is expected to support peak data rates (20 Gbps for downlink and 10 Gbps for uplink) and user-experienced data rates in the order of three times what is offered by IMT-Advanced. Meanwhile, in a case of the URLLC, the tighter requirements are put on ultra-low latency (0.5 ms for each of UL and DL for user plane latency) and high reliability (1-10-5 within 1 ms). Finally, the mMTC may preferably require high connection density (1,000,000 devices/km² in an urban environment), large coverage in harsh environments, and extremely long-life battery for low cost devices (15 years).

Thus, the OFDM numerology (e.g., subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (also referred to as TTI) than an mMTC service. Furthermore, deployment scenarios with large channel delay spreads may preferably require a longer CP duration than scenarios with short delay spreads. The subcarrier spacing may be optimized accordingly to retain the similar CP overhead. NR may support more than one value of subcarrier spacing. Correspondingly, subcarrier spacing of 15 kHz, 30 kHz, 60 kHz ... are currently considered. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR, for each numerology and carrier, a resource grid of subcarriers and OFDM symbols is defined for each of uplink and downlink. Each element in the resource grid is called a resource element and is specified based on the frequency index in the frequency domain and the symbol position in the time domain (see 3GPP TS 38.211 v15.6.0).

### <5G NR Functional Split between NG-RAN and 5GC>

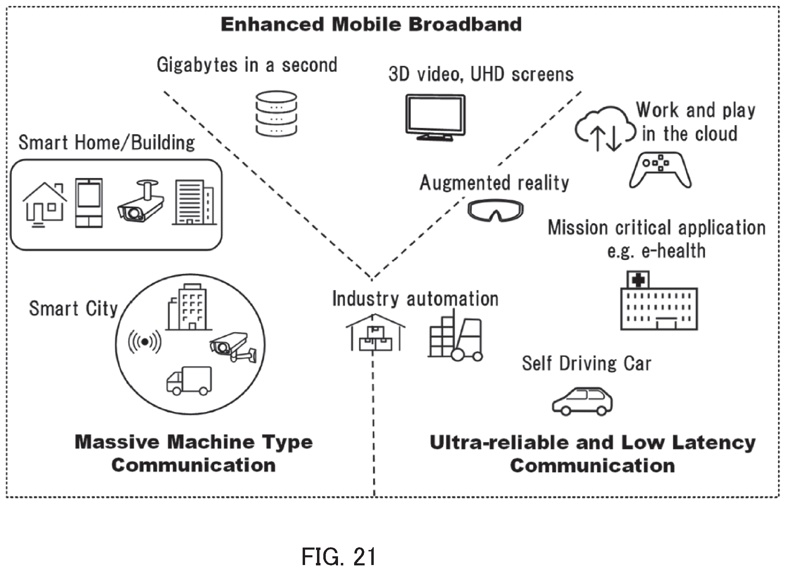

FIG. 21 illustrates functional split between NG-RAN and 5GC. An NG-RAN logical node is a gNB or ng-eNB. The 5GC has logical nodes AMF, UPF, and SMF.

For example, the gNB and ng-eNB host the following main functions:
- Functions for radio resource management such as radio bearer control, radio admission control, connection mobility control, dynamic allocation (scheduling) of resources to UEs in both uplink and downlink;
- IP header compression, encryption, and integrity protection of data;
- Selection of an AMF at UE attachment when no routing to an AMF can be determined from the information provided by the UE;
- Routing of user plane data towards UPF(s);
- Routing of control plane information towards AMF;
- Connection setup and release;
- Scheduling and transmission of paging messages;
- Scheduling and transmission of system broadcast information (originated from the AMF or Operation, Admission, Maintenance (OAM));
- Measurement and measurement reporting configuration for mobility and scheduling;
- Transport level packet marking in the uplink;
- Session management;
- Support of network slicing;
- QoS Flow management and mapping to data radio bearers;
- Support of UEs in RRC_INACTIVE state;
- Distribution function for NAS messages;
- Radio access network sharing;
- Dual connectivity; and
- Tight interworking between NR and E-UTRA.

The access and mobility management function (AMF) hosts the following main functions:
- Non-Access Stratum (NAS) signaling termination function;
- NAS signaling security;
- Access Stratum (AS) security control;
- Inter Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

Furthermore, the user plane function (UPF) hosts the following main functions:
- Anchor point for intra-/inter-RAT mobility (when applicable);
- External protocol data unit (PDU) session point of interconnect to a data network;
- Packet routing and forwarding;
- Packet inspection and user plane part of policy rule enforcement;
- Traffic usage reporting;
- Uplink classifier to support routing traffic flows to a data network;
- Branching point to support multi-homed PDU session;
- QoS handling for user plane (e.g., packet filtering, gating, and UL/DL rate enforcement);
- Uplink traffic verification (SDF to QoS flow mapping); and
- Downlink packet buffering and downlink data indication triggering.

Finally, the session management function (SMF) hosts the following main functions:
- Session management;
- UE IP address allocation and management;
- Selection and control of UPF;
- Configuration function of traffic steering at a user plane function (UPF) to route traffic to proper destination;
- Control part policy enforcement and QoS; and
- Downlink data indication.

### <RRC Connection Setup and Reconfiguration Procedures>

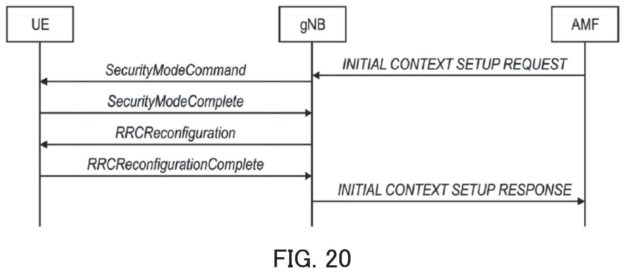

FIG. 20 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. This transition involves that the AMF prepares the UE context data (including, for example, PDU session context, security key, UE radio capability, and UE security capabilities, etc.) and transmits the UE context data to the gNB with an INITIAL CONTEXT SETUP REQUEST. Then, the gNB activates the AS security with the UE, which is performed by the gNB transmitting a SecurityModeCommand message to the UE and by the UE responding to the gNB with a SecurityModeComplete message. Afterwards, the gNB performs the reconfiguration to set up the Signaling Radio Bearer 2 (SRB2) and Data Radio Bearer(s) (DRB(s)) by transmitting an RRCReconfiguration message to the UE and, in response, receiving an RRCReconfigurationComplete from the UE. For a signaling-only connection, the steps relating to the RRCReconfiguration are skipped since the SRB2 and DRBs are not setup. Finally, the gNB indicates to the AMF that the setup procedure is completed with an INITIAL CONTEXT SETUP RESPONSE.

In the present disclosure, thus, an entity (e.g., AMF, SMF, etc.) of the 5th Generation Core (5GC) is provided that includes control circuitry, which, in operation, establishes a Next Generation (NG) connection with a gNodeB, and a transmitter, which in operation, transmits an initial context setup message, via the NG connection, to the gNodeB to cause a signaling radio bearer setup between the gNodeB and User Equipment (UE). In particular, the gNodeB transmits a Radio Resource Control (RRC) signaling containing a resource allocation configuration information element (IE) to the UE via the signaling radio bearer. The UE then performs an uplink transmission or a downlink reception based on the resource allocation configuration.

### <Usage Scenarios of IMT for 2020 and beyond>

FIG. 21 illustrates some of the use cases for 5G NR. In the 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. Further to further extending the eMBB support, the current and future work would involve the standardization for ultra-reliable and low-latency communications (URLLC) and massive machine-type communications (mMTC). FIG. 21 illustrates some examples of envisioned usage scenarios for IMT for 2020 and beyond (see, e.g., ITU-R M. 2083 FIG. 2).

The URLLC use case has stringent requirements for capabilities such as throughput, latency, and availability. The URLLC use case has been envisioned as one of element techniques to enable future vertical applications such as wireless control of industrial manufacturing or production processes, remote medical surgery, distribution automation in a smart grid, transportation safety, etc. Ultra-reliability for the URLLC is to be supported by specifying the techniques to meet the requirements set by TR 38.913. For NR URLLC in Release 15, key requirements include a target user plane latency of 0.5 ms for uplink (UL) and 0.5 ms for downlink (DL). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for the URLLC, more compact DCI formats, repetition of PDCCH, etc. However, the scope may widen for achieving ultra-reliability as the NR becomes more stable and developed (for NR URLLC key requirements). Particular use cases of NR URLLC in Release 15 include augmented reality/virtual reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. The pre-emption means that a transmission for which resources have already been allocated is stopped, and the already allocated resources are used for another transmission that has been requested later but has lower latency/higher priority requirements. Accordingly, the already granted transmission is replaced with a later transmission. The pre-emption is applicable independent of the particular service type. For example, a transmission for a service-type A (URLLC) may be replaced with a transmission for a service type B (such as eMBB). Technology enhancements with respect to reliability improvement include dedicated CQI/MCS tables for the target BLER of 1E-5.

The use case of the mMTC (massive machine type communication) is characterized by a very large number of connected devices typically transmitting a relatively low volume of non-delay sensitive data. Devices are required to be low cost and to have a very long battery life. From the NR perspective, utilizing very narrow bandwidth parts is one possible solution to have power saving from the UE perspective and enable the long battery life.

As mentioned above, it is expected that the scope of reliability improvement in NR becomes wider. One key requirement to all the cases, and especially necessary for the URLLC and mMTC for example, is high reliability or ultra-reliability. Several mechanisms can be considered to improve the reliability from the radio perspective and network perspective. In general, there are a few key important areas that can help improve the reliability. These areas include compact control channel information, data/control channel repetition, and diversity with respect to the frequency, time, and/or spatial domain. These areas are applicable to reliability improvement in general, regardless of particular communication scenarios.

For NR URLLC, further use cases with tighter requirements have been considered such as factory automation, transport industry, and electrical power distribution. The tighter requirements are higher reliability (up to 10⁻⁶ level), higher availability, packet size of up to 256 bytes, time synchronization down to the order of a few µs where the value can be one or a few µs depending on frequency range and short latency in the order of 0.5 to 1 ms (e.g., target user plane latency of 0.5 ms) depending on the use cases.

Moreover, for NR URLLC, several technology enhancements in terms of the physical layer perspective are possible. These technology enhancements include Physical Downlink Control Channel (PDCCH) enhancements related to compact DCI, PDCCH repetition, and increased PDCCH monitoring. Further, Uplink Control Information (UCI) enhancements are related to enhanced Hybrid Automatic Repeat Request (HARQ) and CSI feedback enhancements. Also, PUSCH enhancements related to mini-slot level hopping and retransmission/repetition enhancements are possible. The term "mini-slot" refers to a transmission time interval (TTI) including a smaller number of symbols than a slot (a slot includes fourteen symbols).

### <QoS Control>

The 5G Quality of Service (QoS) model is based on QoS flows and supports both QoS flows that require guaranteed flow bit rate (GBR QoS flows) and QoS flows that do not require guaranteed flow bit rate (non-GBR QoS Flows). At the NAS level, the QoS flow is thus the finest granularity of QoS differentiation in a PDU session. The QoS flow is specified within a PDU session by a QoS Flow ID (QFI) carried in an encapsulation header via the NG-U interface.

For each UE, the 5GC establishes one or more PDU sessions. For each UE, the NG-RAN establishes at least one Data Radio Bearer (DRB) matching with the PDU session, for example as illustrated above with reference to FIG. 20. Additional DRB(s) for QoS flow(s) of that PDU session can be subsequently configured (it is up to NG-RAN when to do so). The NG-RAN maps packets belonging to different PDU sessions to different DRBs. NAS level packet filters in the UE and 5GC associate UL and DL packets with QoS flows, whereas AS-level mapping rules in the UE and in the NG-RAN associate UL and DL QoS flows with DRBs.

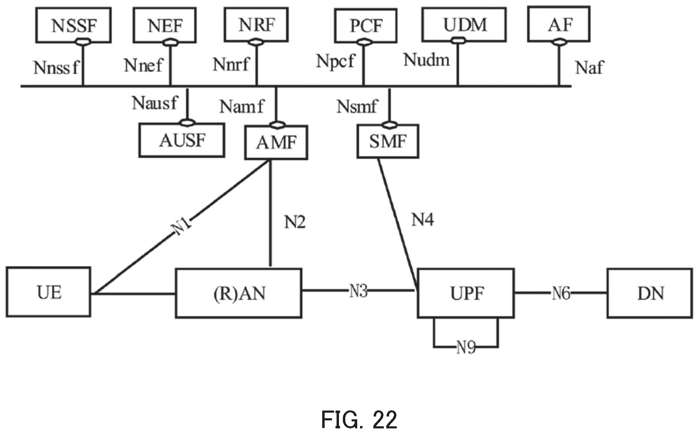

FIG. 22 illustrates a 5G NR non-roaming reference architecture (see TS 23.501 v16.1.0, section 4.23). Application Function (AF, e.g., an external application server hosting 5G services exemplified in FIG. 21) interacts with the 3GPP core network in order to provide services. For example, to support application giving influence on traffic routing, accessing Network Exposure Function (NEF) or interacting with the policy framework for policy control (see Policy Control Function, PCF), e.g., QoS control is performed. Based on operator deployment, application functions considered to be trusted by the operator can be allowed to interact directly with relevant network functions. Application functions not allowed by the operator to access directly the network functions use the external exposure framework via the NEF to interact with relevant network functions.

FIG. 22 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or 3rd party services). All of or a part of the core network functions and the application services may be deployed and running on cloud computing environments.

In the present disclosure, thus, an application server (e.g., AF of the 5G architecture) is provided that includes a transmitter, which in operation, transmits a request containing a QoS requirement for at least one of the URLLC, eMMB, and mMTC services to at least one of functions (e.g., NEF, AMF, SMF, PCF, UPF, etc) of the 5GC to establish a PDU session including a radio bearer between a gNodeB and a UE in accordance with the QoS requirement, and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. Further, a FPGA (Field Programmable Gate Array) that can be programmed after the manufacture of the LSI or a reconfigurable processor in which the connections and the configurations of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a communication function (collectively referred to as a communication apparatus). The communication apparatus may include a radio transmitter/receiver (transceiver) and processing/control circuitry. The transceiver may include and/or function as a receiver and a transmitter. The transceiver (transmitter/receiver) may include a Radio Frequency (RF) module and one or more antennas. The RF module may include an amplifier and an RF modulator/demodulator or components similar to these components. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may include a device such as a controller or a sensor which is coupled to a communication device performing a function of communication described in the present disclosure. For example, the communication apparatus may include a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one exemplary embodiment of the present disclosure includes: control circuitry, which, in operation, determines a measurement beam for a cross-link interference between terminals based on at least one of a transmission configuration indication state (TCI state) and/or a reception beam of a terminal; and transmission circuitry, which, in operation, transmits information related to a measurement value of the cross-link interference measured using the measurement beam.

In one exemplary embodiment of the present disclosure, the control circuitry determines the measurement beam based on one or some of a plurality of the TCI states related to a downlink channel and configured for the terminal.

In one exemplary embodiment of the present disclosure, the control circuitry determines the measurement beam based on a certain TCI state for measuring the cross-link interference, the certain TCI state being different from a first TCI state related to a downlink channel, the certain TCI state being referred to as a second TCI state.

In one exemplary embodiment of the present disclosure, the control circuitry determines the measurement beam based on a first TCI state currently used for communication of a downlink channel.

In one exemplary embodiment of the present disclosure, the control circuitry determines the measurement beam based on the first TCI state and a second TCI state corresponding to a beam adjacent to a beam corresponding to the first TCI state.

In one exemplary embodiment of the present disclosure, the control circuitry determines the measurement beam based on information for identifying the reception beam configured or indicated by a base station.

In one exemplary embodiment of the present disclosure, the transmission circuitry transmits information on a plurality of the reception beams to a base station, and the control circuitry determines the measurement beam based on the TCI state determined based on the information on the plurality of reception beams in the base station.

In one exemplary embodiment of the present disclosure, the control circuitry determines the measurement beam based on the reception beam, and the transmission circuitry transmits information on the measurement beam to a base station.

In one exemplary embodiment of the present disclosure, the control circuitry determines the measurement beam based on the reception beam corresponding to a transmission beam of the terminal.

A base station according to one exemplary embodiment of the present disclosure includes: reception circuitry, which, in operation, receives information related to a measurement value of a cross-link interference measured using a measurement beam for a cross-link interference between terminals, the measurement beam being determined based on at least one of a transmission configuration indication state (TCI state) and/or a reception beam of a terminal, and control circuitry, which, in operation, performs scheduling for the terminal based on the information related to the measurement value.

A communication method according to one exemplary embodiment of the present disclosure includes: determining, by a terminal, a measurement beam for a cross-link interference between terminals, based on at least one of a transmission configuration indication state (TCI state) and/or a reception beam of the terminal; and transmitting, by the terminal, information related to a measurement value of the cross-link interference measured using the measurement beam.

A communication method according to one exemplary embodiment of the present disclosure includes: receiving, by a base station, information related to a measurement value of a cross-link interference measured using a measurement beam for a cross-link interference between terminals, the measurement beam being determined based on at least one of a transmission configuration indication state (TCI state) and/or a reception beam of a terminal; and performing, by the base station, scheduling for the terminal based on the information related to the measurement value.

The disclosure of Japanese Patent Application No. 2023-131069, filed on August 10, 2023, including the specification, drawings and abstract, is incorporated herein by reference in its entirety.

### Industrial Applicability

An exemplary embodiment of the present disclosure is useful for radio communication systems.

### Reference Signs List

100 Base station
101, 201 Receiver
102, 202 Demodulator/decoder
103, 203 Configurator
104 Scheduler
105, 205 Control information storage
106, 206 Data/control information generator
107, 207 Encoder/modulator
108, 208 Transmitter
200 Terminal
204 Transmission controller

## Claims

1. A terminal, comprising:
control circuitry, which, in operation, determines a measurement beam for a cross-link interference between terminals based on at least one of a transmission configuration indication state (TCI state) and/or a reception beam of a terminal; and
transmission circuitry, which, in operation, transmits information related to a measurement value of the cross-link interference measured using the measurement beam.

2. The terminal according to claim 1, wherein, the control circuitry determines the measurement beam based on one or some of a plurality of the TCI states related to a downlink channel and configured for the terminal.

3. The terminal according to claim 1, wherein, the control circuitry determines the measurement beam based on a certain TCI state for measuring the cross-link interference, the certain TCI state being different from a first TCI state related to a downlink channel, the certain TCI state being referred to as a second TCI state.

4. The terminal according to claim 1, wherein, the control circuitry determines the measurement beam based on a first TCI state currently used for communication of a downlink channel.

5. The terminal according to claim 4, wherein, the control circuitry determines the measurement beam based on the first TCI state and a second TCI state corresponding to a beam adjacent to a beam corresponding to the first TCI state.

6. The terminal according to claim 1, wherein, the control circuitry determines the measurement beam based on information for identifying the reception beam configured or indicated by a base station.

7. The terminal according to claim 1, wherein,
the transmission circuitry transmits information on a plurality of the reception beams to a base station, and
the control circuitry determines the measurement beam based on the TCI state determined based on the information on the plurality of reception beams in the base station.

8. The terminal according to claim 1, wherein,
the control circuitry determines the measurement beam based on the reception beam, and
the transmission circuitry transmits information on the measurement beam to a base station.

9. The terminal according to claim 1, wherein, the control circuitry determines the measurement beam based on the reception beam corresponding to a transmission beam of the terminal.

10. A base station, comprising:
reception circuitry, which, in operation, receives information related to a measurement value of a cross-link interference measured using a measurement beam for a cross-link interference between terminals, the measurement beam being determined based on at least one of a transmission configuration indication state (TCI state) and/or a reception beam of a terminal, and
control circuitry, which, in operation, performs scheduling for the terminal based on the information related to the measurement value.

11. A communication method, comprising:
determining, by a terminal, a measurement beam for a cross-link interference between terminals, based on at least one of a transmission configuration indication state (TCI state) and/or a reception beam of the terminal; and
transmitting, by the terminal, information related to a measurement value of the cross-link interference measured using the measurement beam.

12. A communication method, comprising:
receiving, by a base station, information related to a measurement value of a cross-link interference measured using a measurement beam for a cross-link interference between terminals, the measurement beam being determined based on at least one of a transmission configuration indication state (TCI state) and/or a reception beam of a terminal; and
performing, by the base station, scheduling for the terminal based on the information related to the measurement value.
